# EUROPÄISCHE PATENTSCHRIFT

(11) **EP 3 530 901 B1**
(45) Veröffentlichungstag und Bekanntmachung des Hinweises auf die Patenterteilung: **09.09.2026**
(21) Anmeldenummer: 19157139.7
(22) Anmeldetag: 14.02.2019
(51) Int. Cl.: F01P 7/16, F01P 5/10, F01P 3/02

(54) **BRENNKRAFTMASCHINE**
INTERNAL COMBUSTION ENGINE
MOTEUR À COMBUSTION INTERNE

(30) Priorität: 23.02.2018 DE 102018104105
(43) Veröffentlichungstag der Anmeldung: 28.08.2019
(73) Patentinhaber: VOLKSWAGEN AKTIENGESELLSCHAFT, 38440 Wolfsburg (DE)
(72) Erfinder: KIEL, Marco, 39116 Magdeburg (DE); DROSSEL, Marco, 39649 Mieste (DE)
(74) Vertreter: Bungartz, Florian

(56) Entgegenhaltungen:
- DE-A1- 102009 058 585
- DE-A1- 102010 015 107
- DE-A1- 102012 019 091
- DE-A1- 102014 201 167
- DE-A1- 102016 205 488

## Beschreibung

Die Erfindung betrifft eine Brennkraftmaschine und ein Kraftfahrzeug mit einer solchen Brennkraftmaschine.

Brennkraftmaschinen für Kraftfahrzeuge weisen in der Regel ein Kühlsystem auf, in dem ein Kühlmittel mittels einer oder mehrerer Kühlmittelpumpen in mindestens einem Kühlkreis gepumpt wird und dabei Wärmeenergie von in den Kühlkreis integrierten Wärmequellen, insbesondere einem Verbrennungsmotor sowie einem Motorölkühler, einem Getriebeölkühler, einem Kühler eines Abgasturboladers und/oder einem Ladeluftkühler, aufnimmt. Diese Wärmeenergie wird anschließend in einem Kühlmittelkühler sowie zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Kühlsysteme für Brennkraftmaschinen in unterschiedlichen Ausgestaltungsformen sind in der DE 43 08 002 C1, der DE 100 00 299 A1, der DE 100 47 081 A1, der DE 10 2010 015 106 A1, der DE 10 2014 219 252 A1 und der EP 1 947 308 A1 beschreiben.

Die DE 10 2016 205 488 A1, die DE 10 2009 058 585 A1, die DE 10 2012 019 091 A1, die DE 10 2014 201 167 A1 und die DE 10 2010 015 107 A1 offenbaren jeweils eine Brennkraftmaschine mit einem Kühlsystem, wobei während eines Nichtbetriebs eines Verbrennungsmotors der Brennkraftmaschine eine Nachkühlfunktionalität realisierbar ist, indem mittels einer elektromotorisch angetriebenen Kühlmittelpumpe Kühlmittel in einem auch den Verbrennungsmotor umfassenden Kühlkreis förderbar ist.

Der Erfindung lag die Aufgabe zugrunde, bei einer Brennkraftmaschine mit einem Kühlsystem eine verbesserte Kühlleistung für einen in das Kühlsystem integrierten Verbrennungsmotor während eines Nichtbetriebs des Verbrennungsmotors zu erreichen.

Diese Aufgabe wird mittels einer Brennkraftmaschine gemäß dem Patentanspruch 1 gelöst. Vorteilhafte Ausgestaltungsformen der erfindungsgemäßen Brennkraftmaschine sind Gegenstände der weiteren Patentansprüche und/oder ergeben sich aus der nachfolgenden Beschreibung der Erfindung.

Erfindungsgemäß ist eine Brennkraftmaschine vorgesehen, die einen Verbrennungsmotor (vorzugsweise ein Dieselmotor, alternativ z.B. auch ein Ottomotor) und ein Kühlsystem umfasst. Das Kühlsystem weist zumindest eine erste, mit dem Verbrennungsmotor antriebsverbundene Kühlmittelpumpe, einen Kühlmittelkühler, eine zweite, elektromotorisch angetriebene Kühlmittelpumpe, eine oder mehrere Wärmequellen, die oder von denen eine der Verbrennungsmotor ist, sowie ein Verteilsystem zur Verteilung eines Kühlmittels in dem Kühlsystem auf. Der Verbrennungsmotor umfasst einen Zylinderkopf und ein Zylindergehäuse, die jeweils Kühlmittelkanäle als Teile des Kühlsystems umfassen. Das Kühlsystem weist weiterhin zumindest einen Heizungswärmetauscher, einen den Kühlmittelkühler umgehenden Kühlerbypass, sowie eine Verteilvorrichtung mit einem Aktor als Teil des Verteilsystems auf. Das Kühlsystem ist weiterhin derart ausgebildet, dass bei einem Nichtbetrieb des Verbrennungsmotors und damit auch bei einem Nichtbetrieb der ersten Kühlmittelpumpe Kühlmittel mittels der zweiten Kühlmittelpumpe in einem die Wärmequelle(n) und den Kühlmittelkühler umfassenden beziehungsweise integrierenden (ersten) Kühlkreis förderbar ist beziehungsweise gefördert wird. Vorzugsweise ist/wird dabei das gesamte über die Wärmequelle(n) förderbare/geförderte Kühlmittel auch über den Kühlmittelkühler förderbar/gefördert. Die Verteilvorrichtung ist dabei derart ausgebildet, dass diese in einer Nullstellung der Verteilvorrichtung eine aus dem Kühlkanal des Zylinderkopfs kommende Kühlmittelströmung vollständig über den Heizungswärmetauscher und anschließend den Kühlmittelkühler führt. Für ein erfindungsgemäßes Nachkühlen wird die Verteilvorrichtung dabei in diese Nullstellung einer solchen Verteilvorrichtung gestellt.

Durch die erfindungsgemäße Ausgestaltung einer Brennkraftmaschine wird ermöglicht, für die in den (ersten) Kühlkreis integrierte(n) Wärmequelle(n) ein Nachkühlen zu realisieren, um insbesondere nach einer Beendigung eines zuvor erfolgenden Betriebs des Verbrennungsmotors mit relativ hoher Leistungsabgabe eine Überhitzung der Wärmequelle(n) und insbesondere des in der/den Wärmequelle(n) vorhandene Kühlmittels infolge eines noch erheblichen Wärmeübergangs von der/den Wärmequelle(n) auf das Kühlmittel zu vermeiden, indem das Kühlmittel in dem (ersten) Kühlkreis mittels der elektromotorisch und damit unabhängig von einem Betrieb des Verbrennungsmotors antreibbaren Kühlmittelpumpe gefördert wird. Weil das Kühlmittel dabei über den Kühlmittelkühler geführt wird, kann gleichzeitig auch eine ausreichende Abfuhr von Wärmeenergie von dem Kühlmittel an Umgebungsluft realisiert werden. Um diesen Wärmeübergang von dem Kühlmittel auf Umgebungsluft zu verbessern und insbesondere auch steuern zu können, kann vorzugsweise vorgesehen sein, dass dem Kühlmittelkühler ein vorzugsweise elektromotorisch angetriebenes Gebläse zugeordnet ist, dass bedarfsweise betrieben wird, wenn Kühlmittel für ein Nachkühlen in dem ersten Kühlkreis gefördert wird.

Bei der weiteren oder einer der weiteren in den (ersten) Kühlkreis integrierten Wärmequellen kann es sich vorzugsweise um einen Abgasturbolader handeln, da insbesondere für diesen, neben dem Verbrennungsmotor, ein Nachkühlen nach der Beendigung eines Betriebs des Verbrennungsmotors sinnvoll sein kann. Ein Kühlen des Abgasturboladers, insbesondere eines Lagerstuhls des Abgasturboladers, kann mittels eines ATL-Kühlers, der vorzugsweise ebenfalls in Form mindestens eines in einem Gehäuse des Abgasturboladers ausgebildeten Kühlmittelkanals ausgeführt sein kann, erfolgen.

Es kann vorgesehen sein, ausschließlich der Zylinderkopf und folglich nicht auch das Zylindergehäuse in den ersten Kühlkreis integriert ist, da der Zylinderkopf im Betrieb des Verbrennungsmotors thermisch höher belastet sein kann, so dass für diesen ein Nachkühlen entsprechend dem erfindungsgemäßen Vorgehen, d.h. durch eine Förderung von Kühlmittel mittels der zweiten Kühlmittelpumpe bei einem Nichtbetrieb des Verbrennungsmotors, sinnvoll sein kann.

Die Verteilvorrichtung kann weiterhin derart ausgebildet sein, dass diese
- in einer ersten Stellung eine von dem Zylinderkopf kommende Kühlmittelströmung vollständig über den Heizungswärmetauscher und anschließend den Kühlerbypass führt;
- in einer zweiten Stellung einen Teil der aus dem Kühlkanal des Zylinderkopfs kommenden Kühlmittelströmung unter Umgehung des Heizungswärmetauschers durch den Kühlerbypass führt;
- in einer dritten Stellung ergänzend zu der zweiten Stellung eine Kühlmittelströmung durch den Kühlkanal des Zylindergehäuses (vorzugsweise vollständig) zulässt, und
- in einer vierten Stellung abweichend von der dritten Stellung das gesamte an der Verteilvorrichtung ankommende Kühlmittel über den Kühlmittelkühler führt.

Zur Einstellung der verschiedenen Stellungen der Verteilvorrichtung kann vorzugsweise vorgesehen sein, dass diese derart ausgebildet ist, dass die verschiedenen Stellungen in der genannten Reihenfolge der Stellungen (null bis vier) bei einer Ansteuerung des vorzugsweise elektromotorischen, pneumatischen oder hydraulischen Aktors mittels einer Steuerungsvorrichtung in einer Betätigungsrichtung einstellbar sind.

Hierzu kann eine erfindungsgemäße Brennkraftmaschine vorzugsweise derart ausgebildet sein, dass die Verteilvorrichtung ein Gehäuse aufweist, das einen Verteilraum begrenzt, wobei
- in den Verteilraum
   - ein mit dem Kühlkanal des Zylinderkopfs verbundener erster Einlass,
   - ein mit dem Kühlkanal des Zylindergehäuses verbundener zweiter Einlass und
   - ein mit dem Heizungswärmetauscher verbundener dritter Einlass
   mündet, und wobei aus dem ersten Einlass vor der Mündung in den Verteilraum ein mit dem Heizungswärmetauscher verbundener Abzweig abgeht. Weiterhin kann dazu vorgesehen sein, dass
- aus dem Verteilraum
   - ein mit dem Kühlmittelkühler verbundener erster Auslass und
   - ein mit dem Kühlerbypass verbundener zweiter Auslass
   abgeht. Die verschiedenen Stellungen der Verteilvorrichtung können dann mittels eines, vorzugsweise eines einzigen Verschlusskörpers, der mittels des Aktors innerhalb des Verteilraums bewegbar und der vorzugsweise als Drehschieber ausgebildet ist, eingestellt werden, wobei in der Nullstellung der Verteilvorrichtung die Verbindung zwischen dem Verteilraum einerseits und dem ersten Einlass und dem zweiten Auslass andererseits durch den Verschlusskörper (vorzugsweise vollständig) versperrt und die Verbindung zwischen dem Verteilraum einerseits und dem dritten Einlass sowie dem ersten Auslass andererseits (vorzugsweise vollständig) freigegeben ist. Der mit dem Kühlkanal des Zylindergehäuses verbundene, zweite Einlass der Verteilvorrichtung kann in der Nullstellung vollständig versperrt oder vollständig oder teilweise freigegeben sein. Sofern, wie dies vorzugsweise für den zweiten Einlass und den ersten Einlass vorgesehen ist, mittels der Verteilvorrichtung lediglich zwei Zustände, insbesondere vollständig versperrt und vollständig freigegeben, einstellbar sind, kann auch vorgesehen sein, den zweiten Einlass in der zweiten Stellung der Verteilvorrichtung zyklisch zu versperren und freizugeben, um eine, im zeitlichen Mittel, teilweise Freigabe zu realisieren. Hinsichtlich des zweiten Einlasses kann die Nullstellung der Verteilvorrichtung folglich dynamisch sein.

Weiterhin kann dann vorgesehen sein, dass
- in der ersten Stellung der Verteilvorrichtung die Verbindung zwischen dem Verteilraum einerseits und dem ersten Einlass, dem zweiten Einlass sowie dem ersten Auslass andererseits durch den Verschlusskörper (vorzugsweise vollständig) versperrt und die Verbindung zwischen dem Verteilraum einerseits und dem dritten Einlass sowie dem zweiten Auslass andererseits (vorzugsweise vollständig) freigegeben ist;
- in der zweiten Stellung der Verteilvorrichtung die Verbindung zwischen dem Verteilraum einerseits und dem zweiten Einlass sowie dem ersten Auslass andererseits durch den Verschlusskörper (vorzugsweise vollständig) versperrt und die Verbindung zwischen dem Verteilraum einerseits und dem ersten Einlass, dem dritten Einlass sowie dem zweiten Auslass andererseits (vorzugsweise vollständig) freigegeben ist;
- in der dritten Stellung der Verteilvorrichtung die Verbindung zwischen dem Verteilraum einerseits und dem ersten Auslass andererseits durch den Verschlusskörper (vorzugsweise vollständig) versperrt und die Verbindung zwischen dem Verteilraum einerseits und dem ersten Einlass, dem zweiten Einlass, dem dritten Einlass sowie dem zweiten Auslass andererseits (vorzugsweise vollständig) freigegeben ist; und
- in der vierten Stellung der Verteilvorrichtung die Verbindung zwischen dem Verteilraum einerseits und dem zweiten Auslass andererseits durch den Verschlusskörper (vorzugsweise vollständig) versperrt und die Verbindung zwischen dem Verteilraum einerseits und dem ersten Einlass, dem zweiten Einlass, dem dritten Einlass sowie dem ersten Auslass andererseits (vorzugsweise vollständig) freigegeben ist.

Die Ein- und Auslässe der Verteilvorrichtung können dabei vorzugsweise in Form von in oder von dem Gehäuse ausgebildeten Einlass- und Auslasskanälen ausgebildet sein.

Bei der vierten Stellung und der Nullstellung der Verteilvorrichtung kann es sich vorzugsweise jeweils um eine Endstellung des Verschlusskörpers hinsichtlich der Betätigung mittels des Aktors in oder entgegen der numerisch betrachteten Betätigungsrichtung (null bis vier) handeln, so dass jeweils eine weitere Betätigung beziehungsweise Bewegung des Verschlusskörpers durch den Aktor in oder entgegen dieser Betätigungsrichtung nicht mehr möglich ist, sondern für eine sich anschließende Beeinflussung der Strömung von Kühlmittel durch das Kühlsystem mittels der Verteilvorrichtung die Richtung der Betätigung des Verschlusskörpers umgekehrt werden muss.

Die erste Stellung der Verteilvorrichtung kann vorzugsweise während eines ersten Abschnitts einer Warmlaufphase nach einem Kaltstart der Brennkraftmaschine und folglich beispielsweise bei einer Temperatur des Kühlmittels, die beispielsweise lokal in dem Kühlkanal des Zylinderkopfs oder unmittelbar stromab davon gemessen werden kann und die unterhalb eines definierten Grenzwerts (z.B. 90°C) liegt, der wiederum unterhalb eines vorgesehenen Betriebstemperaturbereichs liegt, in dem definitionsgemäß ein normaler Warmbetrieb der Brennkraftmaschine gegeben ist, eingestellt werden. Infolge der ersten Stellung der Verteilvorrichtung kann dabei Kühlmittel in einem (zweiten) Kühlkreis gefördert werden, der zumindest den Zylinderkopf, die Verteilvorrichtung, den Heizungswärmetauscher sowie die zweite Kühlmittelpumpe umfasst. Infolge der sich anschließenden Führung des Kühlmittels über den Kühlerbypass wird dabei der Kühlmittelkühler umgangen. Vorzugsweise kann in den zweiten Kühlkreis zusätzlich (ggf. ausschließlich) ein AGR-Kühler, und/oder der Abgasturbolader und/oder ein Motorölkühler integriert sein.

Bei einem Betrieb des Kühlsystems mit der Verteilvorrichtung in der ersten Stellung kann die in insbesondere dem Zylinderkopf und gegebenenfalls auch dem Abgasturbolader, bei denen es sich um die sich nach einem Kaltstart am schnellsten erwärmenden Komponenten der Brennkraftmaschine handeln kann, anfallende Wärmeenergie in vorteilhafter Weise genutzt werden, um infolge eines Wärmetauschs in dem Heizungswärmetauscher ein möglichst schnelles Aufwärmen eines Innenraums eines eine erfindungsgemäße Brennkraftmaschine umfassenden (erfindungsgemäßen) Kraftfahrzeugs zu erreichen. Gleichzeitig wird eine Durchströmung des Zylindergehäuses verhindert, wodurch für dieses ein möglichst schnelles Aufwärmen erreicht werden kann, da aus den Brennräumen des Verbrennungsmotors in das Zylindergehäuse übergegangene Wärmeenergie nicht mittels Kühlmittel, das den Kühlmittelkanal des Zylindergehäuses durchströmt, abgeführt wird. Im Gegenteil, durch das stehende Kühlmittel in dem Zylindergehäuse kann eine thermisch isolierende Wirkung für denjenigen Abschnitt des Zylindergehäuses, der zwischen dem Kühlkanal und dem oder den Brennräumen beziehungsweise Zylindern des Verbrennungsmotors liegt, realisiert werden.

Dem Kühlkanal des Zylindergehäuses kann vorzugsweise ein Thermostatventil als zusätzliche Komponente des Verteilsystems neben der Verteilvorrichtung zugeordnet sein, das im weitestmöglich geschlossenen Zustand eine Pilotströmung durchlässt. Mittels des Thermostatventils kann eine Steuerung beziehungsweise Regelung der Durchströmung des Kühlkanals des Zylindergehäuses erreicht werden, die unabhängig von der Steuerung der Kühlmittelströmungen mittels der Verteilvorrichtung ist. Gleichzeitig bewirkt ein Verschließen des zweiten Einlasses, beispielsweise in der ersten Stellung der Verteilvorrichtung, mittels des Verschlusskörpers eine Unterbindung der Pilotströmung, so dass tatsächlich ein in dem Kühlkanal des Zylindergehäuses ruhendes Kühlmittel realisiert werden kann.

Dem Thermostatventil kann ein vorzugsweise separater, d.h. ausschließlich für eine bedarfsweise Umgehung des Thermostatventils vorgesehener Thermostatbypass zugeordnet sein. Dieser Thermostatbypass kann insbesondere dann freigegeben werden, wenn bei noch relativ kaltem Kühlmittel (z.B. < 94°C) eine größere und insbesondere maximale Durchströmung des Kühlkanals des Zylindergehäuses realisiert werden soll. Dies kann insbesondere bei der Anforderung einer hohen und insbesondere maximalen Last im Betrieb des Verbrennungsmotors bei noch relativ kaltem Kühlmittel der Fall sein. Um dies zu erreichen kann vorgesehen sein, dass der Thermostatbypass in einer Zusatzstellung der Verteilvorrichtung freigegeben ist. Hierzu kann vorzugsweise vorgesehen sein, dass der Thermostatbypass, der vorzugsweise in ein Gehäuse der Verteilvorrichtung integriert ist und hierzu aus dem zweiten Einlass der Verteilvorrichtung stromauf des vorzugsweise in den zweiten Einlass integrierten Thermostatventils abzweigt, in den Verteilraum mündet und der Verschlusskörper in der Zusatzstellung der Verteilvorrichtung die Verbindung zwischen dem Verteilraum einerseits und dem ersten Einlass, dem zweiten Einlass sowie dem ersten Auslass andererseits durch den Verschlusskörper versperrt und die Verbindung zwischen dem Verteilraum einerseits und dem Thermostatbypass, dem dritten Einlass sowie dem zweiten Auslass andererseits freigibt. Es kann vorgesehen sein, dass der Thermostatbypass ausschließlich in der Zusatzstellung der Verteilvorrichtung, zumindest jedoch nicht in der Nullstellung, der ersten Stellung und der zweiten Stellung freigegeben ist.

Gemäß einer bevorzugten Ausgestaltungsform einer erfindungsgemäßen Brennkraftmaschine kann ein weiterer, dritter Kühlkreis vorgesehen sein, in den zumindest die Verteilvorrichtung, der Kühlmittelkühler sowie der dazugehörige Kühlerbypass, diese zwei letztgenannten Komponenten in zueinander paralleler Verschaltung, weiterhin die erste Kühlmittelpumpe, die vorzugsweise hinsichtlich der Förderleistung unabhängig von der Antriebsdrehzahl einstellbar ist, sowie die Kühlkanäle des Zylindergehäuses und des Zylinderkopfs, auch diese Kühlkanäle in zueinander paralleler Verschaltung, integriert sind. Der dritte Kühlkreis kann weiterhin bevorzugt mit einer stromab der ersten Kühlmittelpumpe und stromauf der Kühlkanäle des Zylindergehäuses und des Zylinderkopfs aus dem zweiten Kühlkreis abgehenden sowie stromauf der (Haupt-)Kühlmittelpumpe in den zweiten Kühlkreis mündenden Verbindungsleitung kombiniert sein, in die (ggf. ausschließlich) ein Motorölkühler und/oder ein Getriebeölkühler integriert ist/sind. Eine solche Ausgestaltung einer erfindungsgemäßen Brennkraftmaschine ermöglicht, dass in der ersten Stellung der Verteilvorrichtung zusätzlich auch der Motorölkühler und/oder der Getriebeölkühler durchströmt werden, wodurch auch die in diesem/diesen Komponenten anfallende Wärmeenergie in vorteilhafter Weise zum Aufwärmen des Innenraums des Kraftfahrzeugs genutzt werden kann. Der Kühlmittelkühler sowie das Zylindergehäuse werden dabei infolge einer Umgehung mittels des dazugehörigen Bypasses beziehungsweise mittels des Kühlkanals des Zylinderkopfs nicht durchströmt. Dabei kann auch vorgesehen sein, dass die Verbindungsleitung derart mit dem dritten Kühlkreis kombiniert ist, dass in der ersten Stellung der Verteilvorrichtung eine Durchströmung der ersten Kühlmittelpumpe verhindert oder zumindest gedrosselt werden muss, um eine Durchströmung des Motorölkühlers und/oder des Getriebeölkühlers zu gewährleisten. Dabei können diese in Gegenrichtung im Vergleich zu einer Durchströmung während zumindest einiger der übrigen Stellungen der Verteilvorrichtung, insbesondere der zweiten, dritten und vierten Stellung, durchströmt werden.

Um bedarfsweise eine Durchströmung der ersten Kühlmittelpumpe zu verhindern oder zumindest zu drosseln, kann vorzugsweise vorgesehen sein, dass diese einstellbar variabel durchströmbar ist, d.h. es kann eingestellt werden, in welchem Ausmaß diese von dem Kühlmittel durchströmt werden kann. Dabei kann insbesondere vorgesehen sein, dass diese Einstellbarkeit unabhängig davon, ob die Kühlmittelpumpe angetrieben oder nicht angetrieben wird, gegeben ist.

Die erste Stellung der Verteilvorrichtung kann auch in vorteilhafter Weise dazu genutzt werden, ein Temperieren des Innenraums eines erfindungsgemäßen Kraftfahrzeugs während eines Nichtbetriebs des Verbrennungsmotors zu realisieren, was beispielsweise aufgrund einer automatischen Start-Stopp-Funktionalität der Brennkraftmaschine oder auch nach einem manuellen Beendigen des Betriebs des Verbrennungsmotors vorgesehen sein kann. Dabei wird die in den durchströmten Komponenten gespeicherte Wärmeenergie, die bei der Durchströmung auf das Kühlmittel übergeht, in vorteilhafter Weise in dem Heizungswärmetauscher zum Aufwärmen von Umgebungsluft, die dem Innenraum des Kraftfahrzeugs zu dessen Temperierung zugeführt werden soll, genutzt. Ein Unterschied dieser Nachheizphase im Vergleich zu dem ersten Abschnitt der Warmlaufphase entsprechend der ersten Stellung der Verteilvorrichtung kann darin liegen, dass die erste Kühlmittelpumpe zumindest in einem relativ geringen Maße durchströmt wird, während dies für den ersten Abschnitt der Warmlaufphase nicht vorgesehen ist.

Die zweite Stellung der Verteilvorrichtung kann vorzugsweise während eines zweiten Abschnitts der Warmlaufphase oder grundsätzlich dann, wenn die gemessene Temperatur des Kühlmittels zwischen dem definierten Grenzwert (z.B. 90°C) und dem für den normalen Warmbetrieb der Brennkraftmaschine vorgesehen Betriebstemperaturbereich (z.B. >°94°C) liegt, eingestellt werden. Durch das dabei im Vergleich zu der ersten Stellung vorgesehene Freigeben des mit dem Kühlkanal des Zylinderkopfs verbundenen ersten Einlasses, wodurch ein Teil der von dem Zylinderkopf kommenden Kühlmittelströmung unter Umgehung des Heizungswärmetauschers durch die Verteilvorrichtung geführt wird, kann eine relativ große Kühlleistung für den Zylinderkopf, die insbesondere auch unabhängig von dem maximal durch den Heizungswärmetauscher möglichen Mengenstrom des Kühlmittels ist, realisiert werden, so dass lokale thermische Überlastungen des den Zylinderkopf durchströmenden Kühlmittels sicher verhindert werden können. Dazu kann auch vorgesehen sein, dass in der zweiten Stellung der Verteilvorrichtung eine Durchströmung der von dem Verbrennungsmotor angetriebenen ersten Kühlmittelpumpe freigegeben und deren Förderleistung so eingestellt wird, dass ein ausreichend großer Mengenstrom des Kühlmittels durch den Zylinderkopf, der insbesondere größer als in der ersten Stellung der Verteilvorrichtung sein kann, eingestellt wird. Eine Durchströmung des Kühlmittelkühlers ist auch in der zweiten Stellung der Verteilvorrichtung nicht vorgesehen, da die in das Kühlmittel eingebrachte Wärmeenergie dann noch möglichst vollständig zu dessen Aufwärmen beziehungsweise zum Aufwärmen einiger von dem Kühlmittel durchströmter Komponenten der Brennkraftmaschine und gegebenenfalls auch zum Temperieren des Innenraums des Kraftfahrzeugs und/oder zum Temperieren eines AGR-Kühlers genutzt werden soll.

Die dritte Stellung der Verteilvorrichtung unterscheidet sich (vorzugsweise ausschließlich) von der zweiten Stellung dahingehend, dass eine Kühlmittelströmung durch das Zylindergehäuse zugelassen ist, wozu ergänzend der zweite Einlass der Verteilvorrichtung freigegeben wird. Dies kann insbesondere in Kombination mit einer bevorzugten Ausgestaltung der erfindungsgemäßen Brennkraftmaschine, bei der dem Kühlkanal des Zylindergehäuses zusätzlich ein Thermostatventil zugeordnet ist, das im weitestmöglich geschlossenen Zustand eine (relativ kleine) Pilotströmung durchlässt, vorteilhaft sein. Das Freigeben des mit dem Kühlkanal des Zylindergehäuses verbundenen zweiten Einlasses der Verteilvorrichtung kann dann dazu dienen, eine solche Pilotströmung, die beispielsweise ca. fünf Prozent des im Betrieb des Kühlsystems maximal durch den Kühlkanal des Zylindergehäuses förderbaren Mengenstroms des Kühlmittels betragen kann, zu ermöglichen. Eine solche Pilotströmung kann erforderlich sein, um dem Thermostatventil die Informationen über eine mittlere Temperatur des Kühlmittels zu geben, d.h. um dieses zu temperieren, so dass dieses dann die Durchströmung des Kühlkanals des Zylindergehäuses in Abhängigkeit von der Temperatur des ankommenden Kühlmittels steuern beziehungsweise regeln kann. In der ersten und der zweiten Stellung der Verteilvorrichtung soll die Pilotströmung dagegen verhindert sein, um, wie beschrieben, ein möglichst schnelles Erwärmen des Zylindergehäuses zu realisieren, was sich vorteilhaft hinsichtlich einer Geringhaltung der durch das Triebwerk des Verbrennungsmotors bewirkten Reibleistung im Betrieb des Verbrennungsmotors und folglich auf den Wirkungsgrad des Verbrennungsmotors auswirkt.

In der vierten Stellung der Verteilvorrichtung wird das gesamte an der Verteilvorrichtung ankommende Kühlmittel über den Kühlmittelkühler geführt, um eine maximale Kühlleistung des Kühlsystems zu realisieren. Diese vierte Stellung der Verteilvorrichtung kann insbesondere bei einem (Warm-)Betrieb der betriebswarmen Brennkraftmaschine mit relativ hoher Last, insbesondere in Kombination mit einer relativ geringen Fahrgeschwindigkeit eines die Brennkraftmaschine umfassenden Kraftfahrzeugs und/oder bei relativ hoher Umgebungstemperatur, d.h. bei einer relativ geringen Kühlleistung des Kühlmittelkühlers vorgesehen sein.

In anderen Betriebszuständen der Brennkraftmaschine während eines Warmbetriebs kann die in der vierten Stellung realisierte Kühlleistung so groß sein, dass damit eine Kühlung des Kühlmittels unter den vorgesehenen Betriebstemperaturbereich verbunden wäre. Um dies zu vermeiden kann die Verteilvorrichtung derart ausgebildet sein, dass eine oder mehrere Zwischenstellungen , die zwischen der dritten Stellung und der vierten Stellung liegen, einstellbar sind, in denen der mit dem Kühlmittelkühler verbundene erste Auslass und der mit dem Kühlerbypass verbundene zweite Auslass in unterschiedlichen, zueinander gegensätzlichen Ausmaßen teilweise freigegeben und teilweise versperrt sind. Dadurch kann die Rückkühlung des Kühlmittels in dem Kühlmittelkühler bedarfsgerecht gesteuert oder geregelt werden, um eine möglichst konstante Temperatur des Kühlmittels, beispielsweise von ca. 95°C im oder unmittelbar stromab des Kühlkanals des Zylinderkopfs, einzustellen.

Die Erfindung betrifft auch ein Kraftfahrzeug mit einer erfindungsgemäßen Brennkraftmaschine, die insbesondere zur direkten oder indirekten Bereitstellung der Fahrantriebsleistung für das Kraftfahrzeug vorgesehen ist. Bei einem erfindungsgemäßen Kraftfahrzeug kann es sich insbesondere um ein radbasiertes und nicht schienengebundenes Kraftfahrzeug (vorzugsweise ein PKW oder LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die erfindungsgemäße Brennkraftmaschine wird nachfolgend anhand eines in den Zeichnungen dargestellten Ausgestaltungsbeispiels näher erläutert. In den Zeichnungen zeigt:
- Fig. 1:: ein erfindungsgemäßes Kraftfahrzeug
- Fig. 2:: eine erfindungsgemäße Brennkraftmaschine schematisch in einem Blockschaltbild;
- Fig. 3:: die Verteilvorrichtung der Brennkraftmaschine gemäß der Fig. 2 in einer ersten perspektivischen Ansicht;
- Fig. 4:: die Verteilvorrichtung in einer zweiten perspektivischen Ansicht

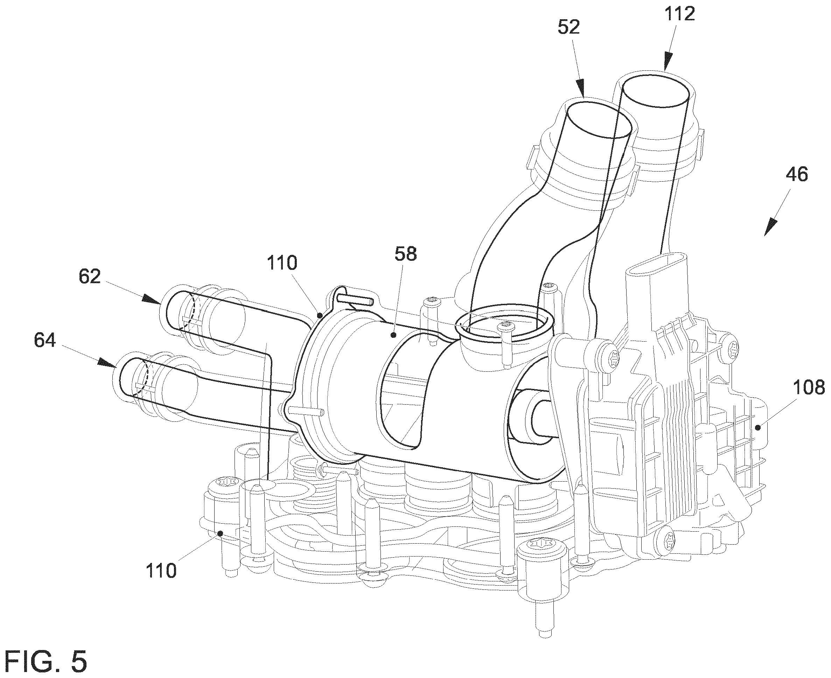

- Fig. 5:: die Verteilvorrichtung in einer dritten perspektivischen und halbtransparenten Ansicht;
- Fig. 6:: schematisch die Verteilvorrichtung in einer ersten Stellung während einer Warmlaufphase der Brennkraftmaschine;
- Fig. 7:: schematisch die Verteilvorrichtung in einer Zusatzstellung;
- Fig. 8:: schematisch die Verteilvorrichtung in einer zweiten Stellung;
- Fig. 9:: schematisch die Verteilvorrichtung in einer dritten Stellung;
- Fig. 10:: schematisch die Verteilvorrichtung in einer vierten Stellung;
- Fig. 11:: schematisch die Verteilvorrichtung in einer Zwischenstellung;
- Fig. 12:: schematisch die Verteilvorrichtung in einer Nullstellung;
- Fig. 13:: schematisch die Verteilvorrichtung in der ersten Stellung während eines Nachheizbetriebs der Brennkraftmaschine; und
- Fig. 14:: in einem Diagramm die Öffnungszustände der Einlässe und Auslässe der Verteilvorrichtung in den einzelnen Stellungen der Verteilvorrichtung.

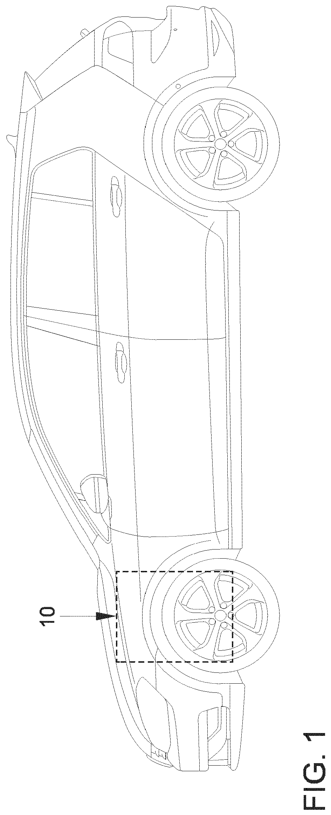

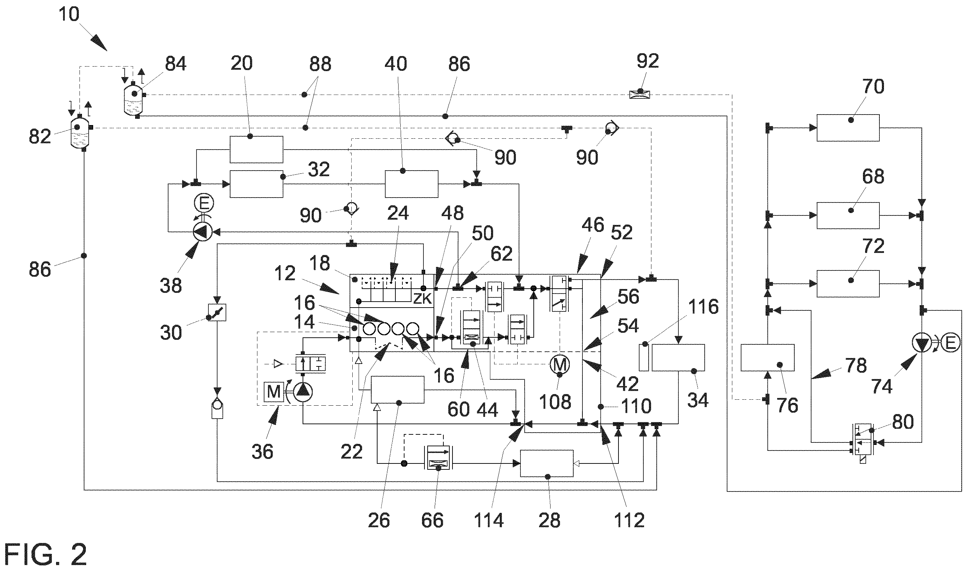

Die Fig. 1 zeigt in vereinfachter Darstellung ein erfindungsgemäßes Kraftfahrzeug mit einer erfindungsgemäßen Brennkraftmaschine 10. Eine solche Brennkraftmaschine 10 kann gemäß der Fig. 2 einen Verbrennungsmotor 12 aufweisen, der insbesondere als nach dem Diesel-Prinzip arbeitender Hubkolben-Verbrennungsmotor ausgebildet sein kann und der ein Zylindergehäuse 14 mit darin ausgebildeten Zylindern 16 sowie einen Zylinderkopf 18 umfasst. Weiterhin weist die Brennkraftmaschine 10 gemäß der Fig. 2 noch ein Kühlsystem mit einem Hauptkühlsystem und einem Nebenkühlsystem auf.

Das Hauptkühlsystem dient einer Kühlung des Verbrennungsmotors 12, von Motoröl zur Schmierung des Verbrennungsmotors 12, von Getriebeöl eines dem Verbrennungsmotor 12 zugeordneten, manuellen oder automatischen Schaltgetriebes (nicht dargestellt), eines Abgasturboladers 20, insbesondere eines Lagerstuhls davon, sowie von Abgas, das über eine Abgasrückführleitung (nicht dargestellt) einer Niederdruck- oder Hochdruck-Abgasrückführung rückgeführt wird.

Das Hauptkühlsystem umfasst hierzu Kühlkanäle 22, 24 des Zylindergehäuses 14 und des Zylinderkopfs 18, einen Motorölkühler 26, einen Getriebeölkühler 28, einen (ATL-)Kühler für den Abgasturbolader 20, der in Form eines Kühlkanals in einem Gehäuse des Abgasturboladers 20 ausgebildet ist, einen Kühler für ein beziehungsweise einen Kühlkanal in einem Abgasrückführventil 30 sowie einen AGR-Kühler 32, d.h. einen sowohl von Kühlmittel des Kühlsystems als auch von rückzuführendem Abgas durchströmten Wärmetauscher. Weiterhin umfasst das Hauptkühlsystem einen ersten Kühlmittelkühler 34 als Hauptkühler des Kühlsystems, eine erste Kühlmittelpumpe 36, nachfolgend als Hauptkühlmittelpumpe bezeichnet, eine zweite Kühlmittelpumpe 38, nachfolgend als Zusatzkühlmittelpumpe bezeichnet, sowie einen Heizungswärmetauscher 40. Der Hauptkühler 34 dient dazu, das diesen durchströmende Kühlmittel durch den Übergang von Wärmeenergie auf Umgebungsluft, die den Hauptkühler 40 ebenfalls durchströmt, rückzukühlen. Der Heizungswärmetauscher 40 dient dazu, bei Bedarf Umgebungsluft, die zur Klimatisierung eines Innenraums eines die Brennkraftmaschine 10 umfassenden Kraftfahrzeugs (gemäß beispielsweise der Fig. 1) vorgesehen ist, aufzuwärmen. Die Hauptkühlmittelpumpe 36 des Hauptkühlsystems wird direkt oder indirekt (z.B. über einen Zahnriemen) von einer Abtriebswelle (insbesondere einer Kurbelwelle; nicht dargestellt) des Verbrennungsmotors 12, d.h. mechanisch, angetrieben. Dabei kann diese hinsichtlich der spezifischen (d.h. jeweils auf die Antriebsdrehzahl bezogenen) Förderleistung steuerbar oder regelbar sowie zudem abschaltbar ausgebildet sein, d.h. diese erzeugt trotz eines Antriebs keine relevante Förderleistung. Weiterhin kann vorgesehen sein, dass sowohl im angetriebenen als auch im nicht angetriebenen Zustand der Hauptkühlmittelpumpe 36 deren Durchströmung verhindert oder in variablem Ausmaß freigegeben ist. Die Zusatzkühlmittelpumpe 38 des Hauptkühlsystems ist dagegen elektromotorisch antreibbar.

Die verschiedenen Wärmetauschkomponenten sowie die Kühlmittelpumpen 36, 38 sind in verschiedene Kühlkreise des Hauptkühlsystems integriert. Ein Hauptkühlkreis umfasst die Kühlkanäle 22, 24 des Zylinderkopfs 18 und des Zylindergehäuses 14, den Hauptkühler 34 sowie einen den Hauptkühler 34 umgehenden Kühlerbypass 42 in zueinander paralleler Verschaltung sowie die Hauptkühlmittelpumpe 36. Die Kühlkanäle 22, 24 des Zylinderkopfs 18 und des Zylindergehäuses 14 sind dabei ebenfalls parallel in den Hauptkühlkreis integriert. Mittels eines ersten, selbsttätig regelnden Thermostatventils 44 (Öffnungstemperatur: z.B. ca. 105 °C) sowie mittels einer dieses Thermostatventil 44 in einem Gehäuse 110 aufnehmenden Verteilvorrichtung 46, die in der Fig. 2 nur funktional dargestellt ist, kann u.a. beeinflusst werden, ob und in welchem Ausmaß auch der Kühlkanal 22 des Zylindergehäuses 14 von dem Kühlmittel durchströmt wird, wenn der Kühlkanal 24 des Zylinderkopfs 18 durchströmt wird. Hierzu ist der Kühlkanal 24 des Zylinderkopfs 18 mit einem ersten Einlass 48 und der Kühlkanal 22 des Zylindergehäuses 14 mit einem zweiten Einlass 50 der Verteilvorrichtung 46 fluidleitend verbunden. Mittels der Verteilvorrichtung 46 kann weiterhin beeinflusst werden, ob und, wenn ja, in welchem Ausmaß Kühlmittel, das u.a. in dem Hauptkühlkreis strömt, über den Hauptkühler 34 oder den dazugehörigen Kühlerbypass 42 geführt wird. Hierzu ist der Hauptkühler 34 einlassseitig mit einem ersten Auslass 52 und der Kühlerbypass 42 mit einem zweiten Auslass 54 der Verteilvorrichtung 46 verbunden. Dabei liegt der zweite Auslass 54 sowie der gesamte Kühlerbypass 42 innerhalb des Gehäuses 110 der Verteilvorrichtung 46, wozu dieses Gehäuse 110 einen auslassseitig mit dem Hauptkühler 34 verbundenen Zusatzeinlass 112 umfasst. Von diesem Zusatzeinlass 112 erstreckt sich eine interne Kühlmittelleitung der Verteilvorrichtung 46, in die auch der Kühlerbypass 42 mündet, zu einem Zusatzauslass 114, der für eine fluidleitend Verbindung mit der Hauptkühlmittelpumpe 36 vorgesehen ist. Die genannten Ein- und Auslässe 48, 50, 52, 54 münden in einen Verteilraum 56 der Verteilvorrichtung 46. Die Mündungsöffnungen der genannten Ein- und Auslässe 48, 50, 52, 54 in den Verteilraum 56 können mittels eines beweglichen und konkret drehbaren Verschlusskörpers 58 beziehungsweise Drehschiebers bedarfsweise freigegeben oder versperrt werden, wodurch die Durchströmungen der einzelnen Komponenten des Hauptkühlsystems, die mit den genannten Ein- und Auslässen 48, 50, 52, 54 direkt oder indirekt fluidleitend verbunden sind, bedarfsweise angepasst werden können. Die Ausgestaltung der Verteilvorrichtung 46 ist dabei derart, dass der erste Einlass 48 und der zweite Einlass 50 in den verschiedenen Stellungen, in die die Verteilvorrichtung 46 beziehungsweise deren Drehschieber 58 einstellbar ist, entweder vollständig versperrt oder vollständig freigegeben sind, während für die Auslässe 52, 54 neben einer vollständigen Freigabe und einer vollständigen Versperrung eine größere oder beliebige Anzahl von Zwischenstellungen mit teilweiser Freigabe/Versperrung einstellbar sind.

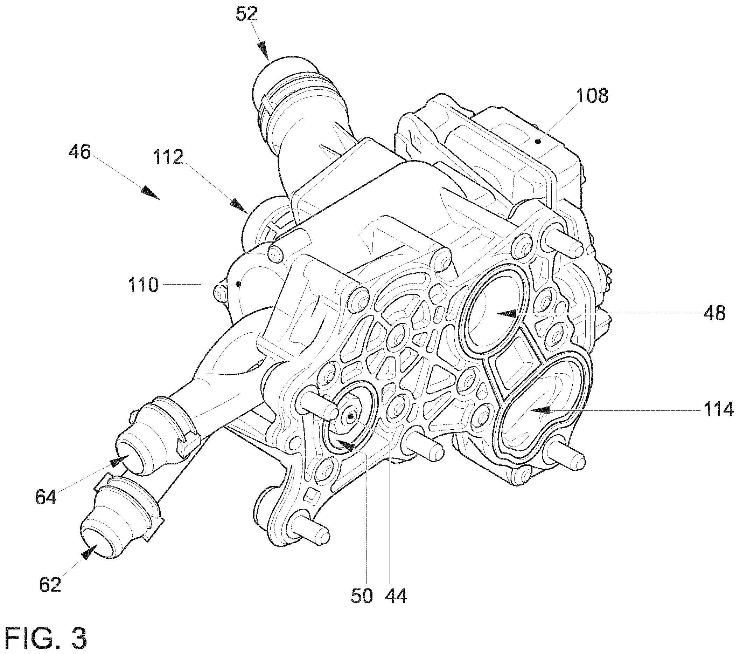

Das erste Thermostatventil 44 ist in einen den zweiten Einlass 50 ausbildenden Einlasskanal der Verteilvorrichtung 46 integriert (vgl. Fig. 3 und 6 bis 13), wobei stromauf dieses Thermostatventils 44 ein Thermostatbypass 60 abgeht, der ebenfalls in den Verteilraum 56 mündet und mittels des Drehschiebers 58 bedarfsweise versperrt oder freigegeben werden kann.

Das Hauptkühlsystem umfasst weiterhin eine erste Nebenstrecke, die Teil eines ersten Nebenkühlkreises und eines zweiten Nebenkühlkreises ist. Die erste Nebenstrecke zweigt aus dem mit dem Kühlkanal 24 des Zylinderkopfs 18 verbunden ersten Einlass 48 ab, wobei dieser Abzweig 62 noch (bezogen auf eine vorgesehene Strömungsrichtung des Kühlmittels durch den Kühlkanal 24 des Zylinderkopfs 18) vor dem Übergang des ersten Einlasses 48 in den Verteilraum 56 der Verteilvorrichtung 46 angeordnet ist, so dass Kühlmittel, das den Kühlkanal 24 des Zylinderkopfs 18 durchströmt hat, stets in die erste Nebenstrecke strömen kann. Die erste Nebenstrecke endet in einem dritten Einlass 64 der Verteilvorrichtung 46, der ebenfalls in den Verteilraum 56 mündet. Diese Mündungsöffnung ist dabei permanent, d.h. unabhängig von der konkreten Stellung des Drehschiebers 58, freigegeben. In die erste Nebenstrecke ist zudem die Zusatzkühlmittelpumpe 38 integriert. Stromab dieser Zusatzkühlmittelpumpe 38 teilt sich die erste Nebenstrecke in zwei parallel verlaufende Stränge auf, wobei in einen ersten dieser Stränge der AGR-Kühler 32 und stromab davon der Heizungswärmetauscher 40 integriert sind, und in den zweiten Strang der Kühlkanal des Abgasturboladers 20 integriert ist. Die zwei Stränge der ersten Nebenstrecke werden vor deren Übergang in den dritten Einlass 64 der Verteilvorrichtung 46 wieder zusammengeführt.

Das Hauptkühlsystem umfasst zudem einen dritten Nebenkühlkreis. Eine zweite Nebenstrecke ist Teil dieses dritten Nebenkühlkreises. In diese zweite Nebenstrecke ist der Kühlkanal des Abgasrückführventils 30 integriert und diese geht in der Nähe des Auslasses des Kühlkanals 24 des Zylinderkopfs 18 ab. Die zweite Nebenstrecke mündet stromauf der Hauptkühlmittelpumpe 36 sowie stromab des Hauptkühlers 34 und stromauf der Mündung des Kühlerbypasses 42 in einen Abschnitt des Hauptkühlkreises.

Ein vierter Nebenkühlkreis umfasst eine dritte Nebenstrecke, die im Bereich der Verzweigung zwischen den Kühlkanälen 22, 24 des Zylindergehäuses 14 und des Zylinderkopfs 18 abgeht und stromauf der Hauptkühlmittelpumpe 36 sowie stromab des Hauptkühlers 34 und der Mündung des Kühlerbypasses 42 wieder in einen Abschnitt des Hauptkühlkreises mündet. In diese dritte Nebenstrecke ist der Motorölkühler 26 integriert.

Ein fünfter Nebenkühlkreis umfasst eine vierte Nebenstrecke, die aus der dritten Nebenstrecke abgeht und die ein zweites Thermostatventil 66 (Öffnungstemperatur: z.B. 75°C) sowie den Getriebeölkühler 28 integriert. Die vierte Nebenstrecke mündet stromauf der Hauptkühlmittelpumpe 36 sowie stromab des Hauptkühlers 34 und stromauf der Mündung des Kühlerbypasses 42 in einen Abschnitt des Hauptkühlkreises.

Das Nebenkühlsystem dient einer Kühlung des zumindest mittels eines Verdichters des Abgasturboladers 20 aufgeladenen Frischgases (Ladeluft), das dem Verbrennungsmotor 12 über einen Frischgasstrang (nicht dargestellt) der Brennkraftmaschine 10 zugeführt wird. Weiterhin dient das Nebenkühlsystem einer Kühlung eines Dosierventils 68, mittels dessen ein Reduktionsmittel in Abgas, das einen Abgasstrang (nicht dargestellt) der Brennkraftmaschine 10 durchströmt, eingebracht werden kann, um mittels selektiver katalytischer Reduktion eine Verringerung von Schadstoffen, insbesondere von Stickoxiden, des Abgases zu erreichen. Und schließlich dient das Nebenkühlsystem einer Kühlung eines elektrischen Antriebs 70 eines elektromotorisch antreibbaren Verdichters, der zur Verdichtung des dem Verbrennungsmotor 12 zuzuführenden Frischgases vorgesehen ist. Dabei kann dieser elektrische Antrieb 70 dem Abgasturbolader 20 oder einem zusätzlichen Verdichter (nicht dargestellt) zugeordnet sein. Der zur Kühlung der Ladeluft vorgesehene Ladeluftkühler 72, der zur Kühlung des Dosierventils 68 vorgesehene Kühlkanal und der zur Kühlung des elektrischen Verdichterantriebs 70 vorgesehene Kühlkanal sind in drei parallele Stränge eines Kühlkreises des Nebenkühlsystems integriert. Weiterhin ist in diesen Kühlkreis in demjenigen Abschnitt, der nicht in die drei parallelen Stränge aufgeteilt ist, eine elektromotorisch antreibbare Kühlmittelpumpe 74 sowie ein weiterer Kühlmittelkühler (Zusatzkühler) 76, der der Rückkühlung des den Kühlkreis des Nebenkühlsystems durchströmenden Kühlmittels dient, integriert. Der Zusatzkühler 76 ist mittels eines Kühlerbypasses 78 umgehbar, wobei eine Aufteilung des den Kühlkreis des Nebenkühlsystems durchströmenden Kühlmittels auf entweder den Zusatzkühler 76 oder den dazugehörigen Kühlerbypass 78 mittels eines Steuerventils 80 veränderbar ist.

Die Temperatur des Kühlmittels kann während eines regulären Betriebs der Brennkraftmaschine 10 in dem Hauptkühlsystem zumindest abschnittsweise deutlich höher als in dem Nebenkühlsystem sein, so dass ersteres auch als Hochtemperaturkühlsystem und letzteres als Niedertemperaturkühlsystem bezeichnet werden kann.

Das Kühlsystem umfasst weiterhin zwei integral ausgebildete Ausgleichsbehälter 82, 84 die teilweise mit dem Kühlmittel und teilweise mit Luft gefüllt sind. Über jeweils eine Verbindungsleitung 86, die aus einem das Kühlmittel aufnehmenden (unteren) Abschnitt des jeweiligen Ausgleichsbehälters 82, 84 abgeht, ist ein erster (82) der Ausgleichsbehälter 82, 84 mit dem Hauptkühlkreis des Hauptkühlsystems und der zweite Ausgleichsbehälter 84 mit dem Kühlkreis des Nebenkühlsystems fluidleitend verbunden. Weiterhin verbinden Entlüftungsleitungen 88 unter Zwischenschaltung entweder eines Rückschlagventils 90 oder einer Drossel 94 die Kühlkreise des Hauptkühlsystems und des Nebenkühlsystems mit dem Luft aufnehmenden (oberen) Abschnitt des jeweils zugehörigen Ausgleichsbehälters 82, 84.

Das Hauptkühlsystem des Kühlsystems gemäß der Fig. 2 kann folgendermaßen betrieben werden.

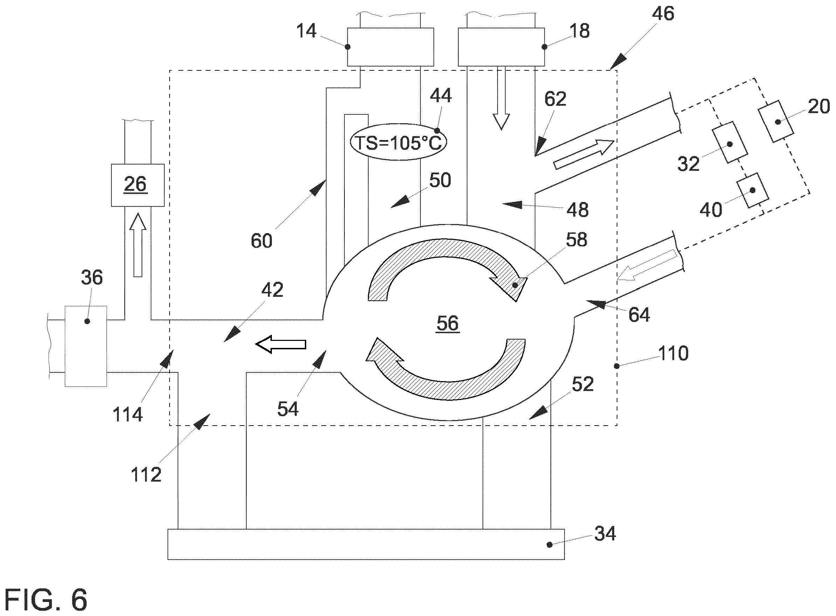

Während eines ersten Abschnitts einer Warmlaufphase, insbesondere nach einem Kaltstart des Verbrennungsmotors 12, wenn folglich das Kühlmittel im gesamten Kühlsystem eine im Wesentlichen der Umgebungstemperatur entsprechende Temperatur aufweist, ist vorgesehen, eine Durchströmung der Hauptkühlmittelpumpe 36 zu verhindern. Während dieses ersten Abschnitts der Warmlaufphase wird eine Förderung von Kühlmittel in dem Hauptkühlsystem ausschließlich mittels der Zusatzkühlmittelpumpe 38, die mit variabler Förderleistung betrieben werden kann, bewirkt. Dabei wird in Verbindung mit einer ersten Stellung 94 der Verteilvorrichtung 46 gemäß der Fig. 6, in der der mit dem Kühlkanal 24 des Zylinderkopfs 18 verbundene erste Einlass 48, der mit dem Kühlkanal 22 des Zylindergehäuses 14 verbundene zweite Einlass 50, der mit den Hauptkühler 34 verbundene erste Auslass 52 und der Thermostatbypass 60 mittels des Drehschiebers 58 (vollständig) versperrt sind, während neben dem permanent freigegebenen dritten Einlass 64 auch der mit dem Kühlerbypass 42 verbundene zweite Auslass 54 (vollständig) freigegeben ist, Kühlmittel in dem ersten Nebenkühlkreis gefördert. Das Kühlmittel durchströmt dabei beispielsweise mit einem (Gesamt-)Volumenstrom von ca. 10 I/min den in die erste Nebenstrecke integrierten Abgasturbolader 20, den AGR-Kühler 32 und den Heizungswärmetauscher 40. Weiterhin durchströmt dieses Kühlmittel den ebenfalls einen Abschnitt des ersten Nebenkühlkreises darstellenden Kühlerbypass 42, weiterhin die dritte Nebenstrecke mit dem darin integrierten Motorölkühler 26 (in einer Strömungsrichtung, die zu derjenigen in einem Warmbetrieb der Brennkraftmaschine entgegengesetzt ist; vgl. Pfeilspitze in der Fig. 2 ohne Füllung) sowie den Kühlkanal 24 des Zylinderkopfs18. Eine Durchströmung auch des Kühlkanals 22 des Zylindergehäuses 14 ist dabei vollständig verhindert. In Abhängigkeit von der Temperatur des den ersten Nebenkühlkreis durchströmenden Kühlmittels wird während der Warmlaufphase mittels des zweiten Thermostatventils 66 eine Durchströmung der vierten Nebenstrecke und folglich des Getriebeölkühlers 28 zumindest anfangs verhindert. Infolge der Durchströmung des ebenfalls einen Abschnitt des ersten Nebenkühlkreises darstellenden Kühlkanals 24 des Zylinderkopfs 18 wird auch die zweite Nebenstrecke beziehungsweise der dritte Nebenkühlkreis mit dem darin integrierten Kühlkanal des Abgasrückführventils 30 durchströmt.

Bei einem Betrieb des Hauptkühlsystems basierend auf der ersten Stellung 94 der Verteilvorrichtung 46 kann die insbesondere in dem Zylinderkopf 18 und dem Abgasturbolader 20 anfallende Wärmeenergie in vorteilhafter Weise genutzt werden, um infolge eines Wärmetauschs in dem Heizungswärmetauscher 40 ein möglichst schnelles Aufwärmen eines Innenraums des Kraftfahrzeugs sowie eine definierte Temperierung des AGR-Kühlers 32 zu erreichen. Gleichzeitig wird eine Durchströmung des Kühlkanals 22 des Zylindergehäuses 14 verhindert, wodurch für dieses ein möglichst schnelles Aufwärmen erreicht werden kann, da aus von den Zylindern 16 begrenzten Brennräumen in das Zylindergehäuse 14 übergegangene Wärmeenergie nicht mittels den Kühlmittelkanal 22 des Zylindergehäuses 14 durchströmenden Kühlmittels abgeführt wird.

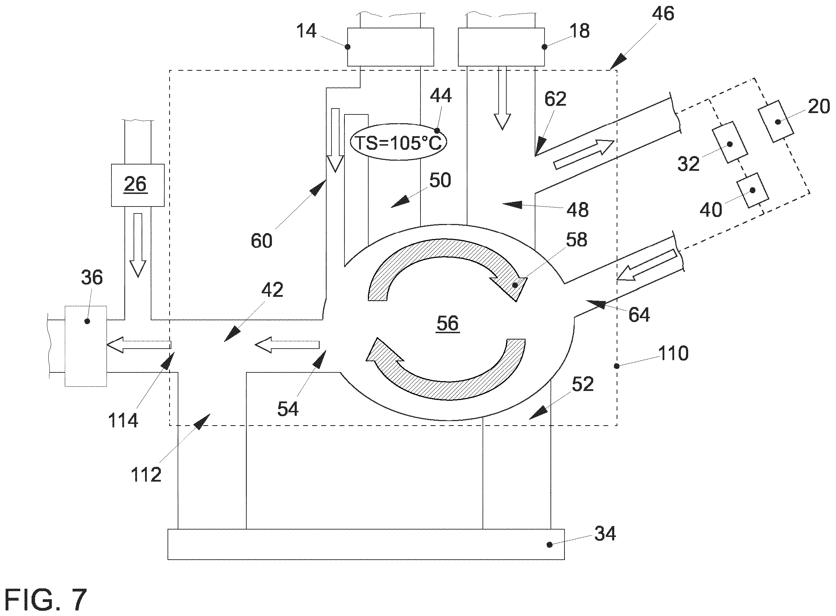

Der Thermostatbypass 60 wird in einer im Übrigen der ersten Stellung 94 entsprechenden Zusatzstellung 100 der Verteilvorrichtung gemäß der Fig. 7 freigegeben, wenn trotz eines noch relativ kalten Kühlmittels eine Durchströmung des Kühlkanals 22 des Zylindergehäuses 14 realisiert werden soll. Dies ist insbesondere bei der Anforderung einer hohen und insbesondere maximalen Last im Betrieb des Verbrennungsmotors 12 bei noch relativ kaltem Kühlmittel der Fall.

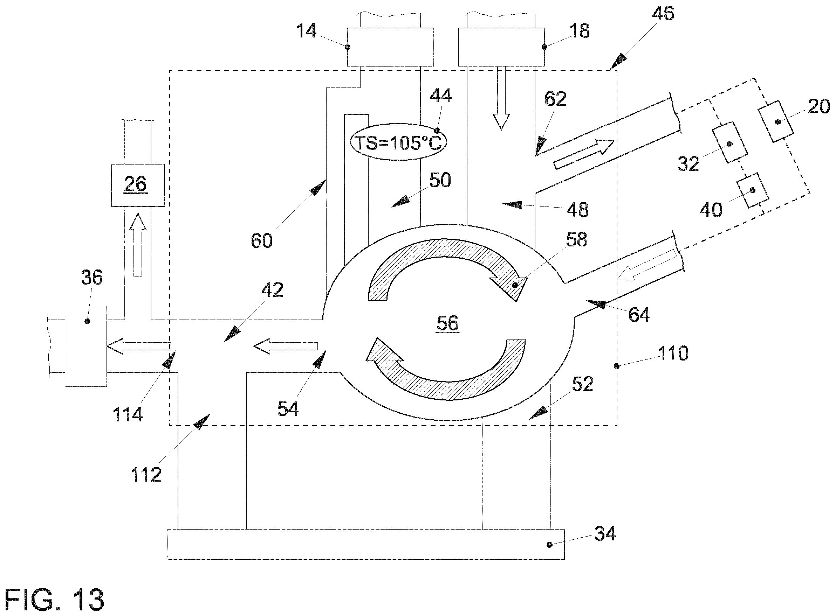

Die erste Stellung 94 der Verteilvorrichtung 46 kann auch in vorteilhafter Weise dazu genutzt werden, um ein Temperieren des Innenraums des Kraftfahrzeugs während eines Nichtbetriebs des Verbrennungsmotors 12 zu realisieren, was aufgrund einer automatischen Start-Stopp-Funktionalität des Verbrennungsmotors 12 oder auch nach einer manuellen Beendigung des Betriebs des Verbrennungsmotors 12 vorgesehen sein kann. Dabei wird die in den weiterhin durchströmten Komponenten des Hauptkühlsystems gespeicherte Wärmeenergie, die bei der Durchströmung auf das Kühlmittel übergegangen ist, in vorteilhafter Weise in dem Heizungswärmetauscher 40 zum Aufwärmen der zur Temperierung des Innenraums des Kraftfahrzeugs genutzten Umgebungsluft verwendet. Ein Unterschied dieses Nachheizbetriebs im Vergleich zu dem ersten Abschnitt der Warmlaufphase entsprechend der ersten Stellung 94 der Verteilvorrichtung 46 kann darin liegen, dass die Hauptkühlmittelpumpe 36 zumindest in einem relativ geringen Maße durchströmt wird (vgl. Fig. 13), während dies für den ersten Abschnitt der Warmlaufphase nicht vorgesehen ist.

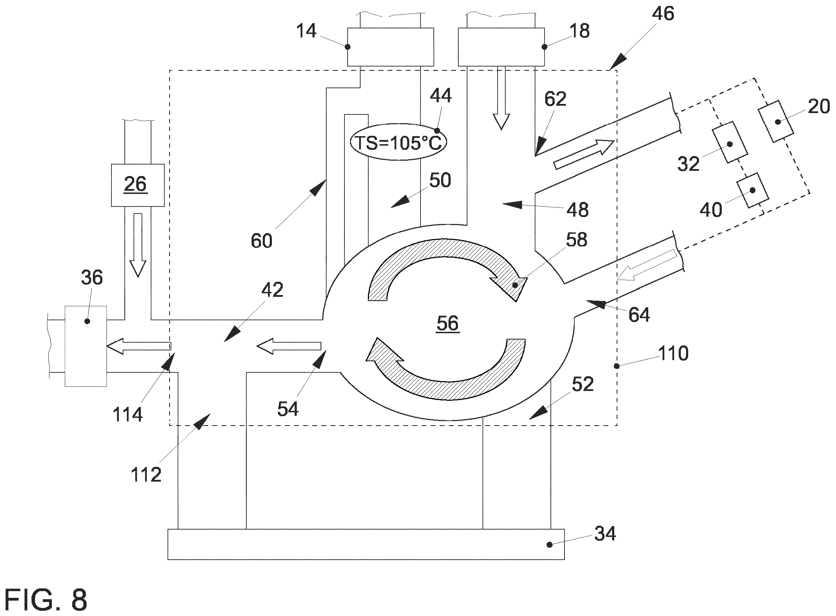

Während eines zweiten Abschnitts der Warmlaufphase ist eine zweite Stellung 96 der Verteilvorrichtung gemäß der Fig. 8 eingestellt. Durch das dabei im Vergleich zu der ersten Stellung 94 vorgesehene Freigeben des mit dem Kühlkanal 24 des Zylinderkopfs 18 verbunden ersten Einlasses 48, wodurch ein Teil der von dem Zylinderkopf 18 kommenden Kühlmittelströmung unter Umgehung des Heizungswärmetauschers 40 durch den Kühlerbypass 42 geführt wird, kann eine relevante Kühlleistung für den Zylinderkopf 18 realisiert werden, so dass dann schon drohende, lokale thermische Überlastungen des den Zylinderkopf 18 durchströmenden Kühlmittels sicher verhindert werden. Dazu kann auch vorgesehen sein, dass in der zweiten Stellung 96 der Verteilvorrichtung 46 eine Durchströmung der von dem Verbrennungsmotor 12 angetriebenen Hauptkühlmittelpumpe freigegeben und deren Förderleistung so eingestellt wird, dass ein ausreichender Mengenstrom des Kühlmittels durch den Zylinderkopf von beispielsweise ca. 50 I/min eingestellt wird. Eine Durchströmung des Hauptkühlers 34 ist auch in der zweiten Stellung 96 der Verteilvorrichtung 46 nicht vorgesehen, da die in das Kühlmittel eingebrachte Wärmeenergie dann noch nicht durch ein Rückkühlen des Kühlmittels in dem Hauptkühler 34 abgeführt werden soll.

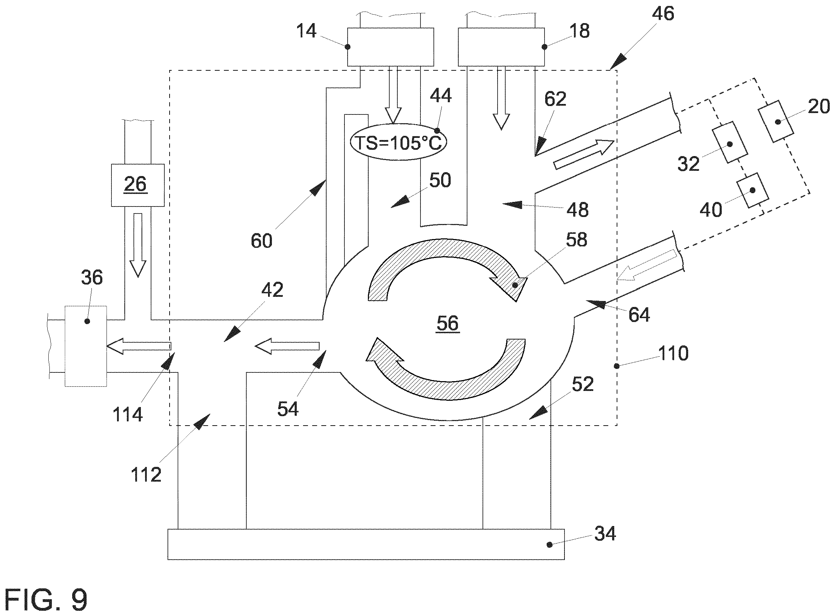

Eine dritte Stellung 98 der Verteilvorrichtung 46, die während eines dritten Abschnitts der Warmlaufphase eingestellt wird, unterscheidet sich von der zweiten Stellung 96 ausschließlich dahingehend, dass eine Kühlmittelströmung durch das Zylindergehäuse 14 von der Verteilvorrichtung 46 zugelassen ist, wozu ergänzend der zweite Einlass 50 der Verteilvorrichtung 46 (vollständig) freigegeben ist (vgl. Fig. 9). Dadurch wird zumindest eine Pilotströmung durch den Kühlkanal 22 des Zylindergehäuses 14 ermöglicht, die dazu dient, das erste Thermostatventil 44 zu temperieren, um diesem die Möglichkeit zu geben, bei einer weiteren Erwärmung des Kühlmittels die Durchströmung des Kühlkanals 22 des Zylindergehäuses 14 selbsttätig zu regeln.

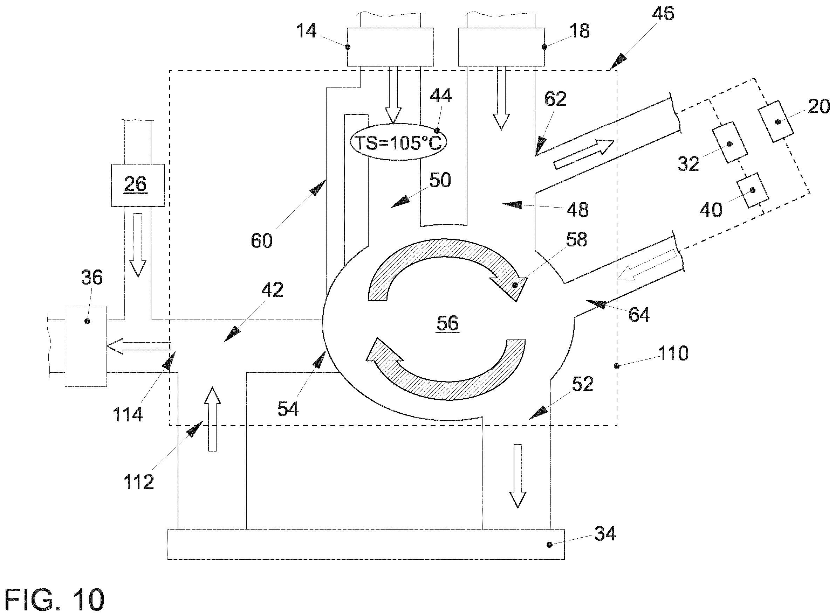

In einer vierten Stellung 102 der Verteilvorrichtung 46, die während eines Warmbetriebs der Brennkraftmaschine und folglich, wenn die Temperatur des Kühlmittels in dem vorgesehenen Betriebstemperaturbereich oder zumindest nicht darunter liegt, eingestellt wird, wird das gesamte an der Verteilvorrichtung 46 ankommende Kühlmittel über den Hauptkühler 34 geführt, indem der mit dem Hauptkühler 34 verbundene erste Auslass 52 vollständig freigegeben und der mit dem Kühlerbypass 42 verbundene zweite Auslass 54 vollständig versperrt ist (vgl. Fig. 10). Dabei wird eine maximale Kühlleistung des Hauptkühlsystems realisiert. Diese vierte Stellung 102 der Verteilvorrichtung 46 ist insbesondere bei einem Betrieb des Verbrennungsmotors 12 mit relativ hoher Last, insbesondere in Kombination mit einer relativ geringen Fahrgeschwindigkeit des die Brennkraftmaschine 10 umfassenden Kraftfahrzeugs und/oder bei einer relativ hohen Umgebungstemperatur und damit bei einer relativ geringen Kühlleistung des Hauptkühlers 34, vorgesehen.

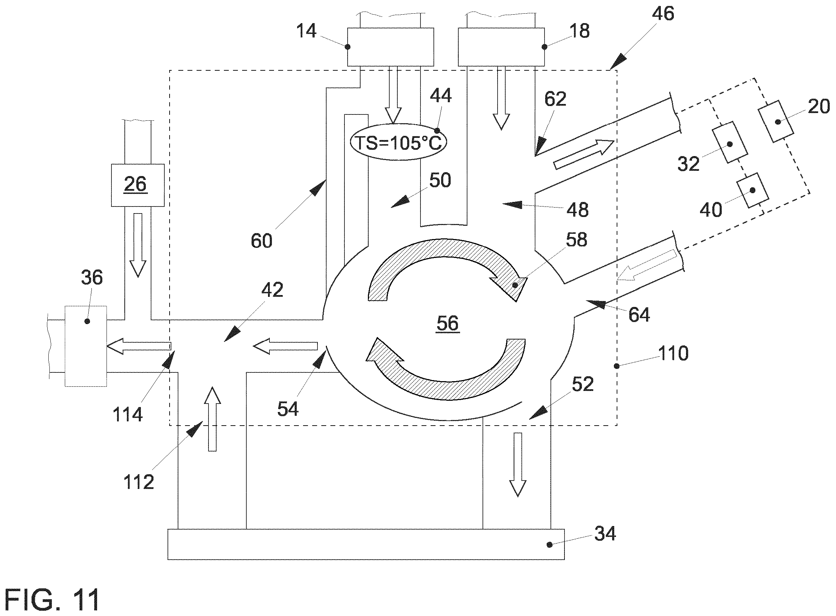

In anderen Betriebszuständen der Brennkraftmaschine 10 während eines Warmbetriebs kann die in der vierten Stellung 102 realisierte Kühlleistung so groß sein, dass damit eine Kühlung des Kühlmittels unter den vorgesehenen Betriebstemperaturbereich verbunden wäre. Um dies zu vermeiden wird die Verteilvorrichtung 46 dann in eine von mehreren zwischen der dritten Stellung 98 und der vierten Stellung 102 liegenden Zwischenstellungen 104 gemäß der Fig. 11 eingestellt, in denen der mit dem Hauptkühler 34 verbundene erste Auslass 52 und der mit dem Kühlerbypass 42 verbundene zweite Auslass 54 in unterschiedlichen, zueinander gegensätzlichen Ausmaßen teilweise freigegeben und teilweise versperrt sind. Dadurch kann die Rückkühlung des Kühlmittels in dem Hauptkühler 34 bedarfsgerecht gesteuert oder geregelt werden, um eine möglichst konstante Temperatur des Kühlmittels von beispielsweise ca. 95°C im oder unmittelbar stromab des Kühlkanals 24 des Zylinderkopfs 18 einzustellen.

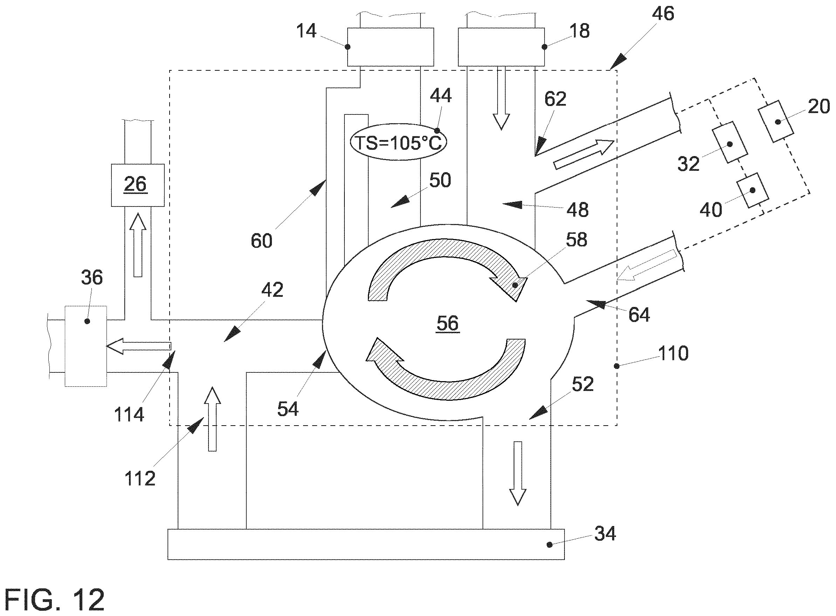

Die Verteilvorrichtung 46 kann weiterhin in eine Nullstellung 106 gemäß der Fig. 12 eingestellt werden, in der eine von dem Zylinderkopf 18 kommende Kühlmittelströmung vollständig über den Heizungswärmetauscher 40 und anschließend den Hauptkühler 34 geführt wird. Dazu sind die Mündungsöffnungen des ersten Einlasses 48, des Thermostatbypasses 60 und des zweiten Auslasses 54 mittels des Drehschiebers 58 versperrt, während neben dem permanent freigegebenen dritten Einlass 64 auch der erste Auslass 52 vollständig freigegeben ist. Der mit dem Kühlkanal 22 des Zylindergehäuses 14 verbundene zweite Einlass 50 der Verteilvorrichtung 46 kann dabei vollständig versperrt oder vollständig oder teilweise freigegeben sein. Da hinsichtlich des zweiten Einlasses 50 mittels der Verteilvorrichtung 46 lediglich zwei Zustände, nämlich vollständig versperrt und vollständig freigegeben, einstellbar sind, kann für eine teilweise Freigabe vorgesehen sein, den Übergang des zweiten Einlasses 50 in den Verteilraum 56 zyklisch zu versperren und freizugeben. Die Nullstellung wird eingestellt, wenn während eines Nichtbetriebs nach einem vorausgegangenen Betrieb des Verbrennungsmotors 12 mit relativ hoher Last ein Nachkühlen für bestimmte Komponenten beziehungsweise Wärmequellen des Kühlsystems, insbesondere den Abgasturbolader 20 und den Zylinderkopf 18, sinnvoll ist. Hierzu wird dann mittels der Zusatzkühlmittelpumpe 38 Kühlmittel in dem zweiten Nebenkühlkreis, der neben der ersten Nebenstrecke auch den den Hauptkühler 34 umfassenden Zweig sowie den den Kühlkanal 24 des Zylinderkopfs 18 umfassenden Zweig des Hauptkühlkreises und zudem die dritte Nebenstrecke mit dem darin integrierten Motorölkühler 26 umfasst, gefördert. Optional kann durch ein zumindest teilweises Freigegeben der Durchströmung der Hauptkühlmittelpumpe 36 auch der diese umfassende Abschnitt des Hauptkühlkreises bei einem Betrieb des Kühlsystems für ein Nachkühlen gemäß der Nullstellung 106 der Verteilvorrichtung 46 durchströmt werden. Bei einem solchen Betrieb des Kühlsystems durchströmt Kühlmittel u.a. den Zylinderkopf 18 und den Abgasturbolader 20, die in dem vorangegangenen Betrieb des Verbrennungsmotors 12 thermisch hoch belastet wurden, wodurch Restwärme dieser Wärmequellen durch das Kühlmittel abgeführt und in dem ebenfalls durchströmten Hauptkühler 34 an Umgebungsluft übertragen wird. Ein dem Hauptkühler 34 zugeordnetes, elektromotorisch angetriebenes Gebläse 116 kann dabei ebenfalls betrieben werden, um eine ausreichende Abfuhr der Wärmeenergie über den Hauptkühler 34 zu gewährleisten.

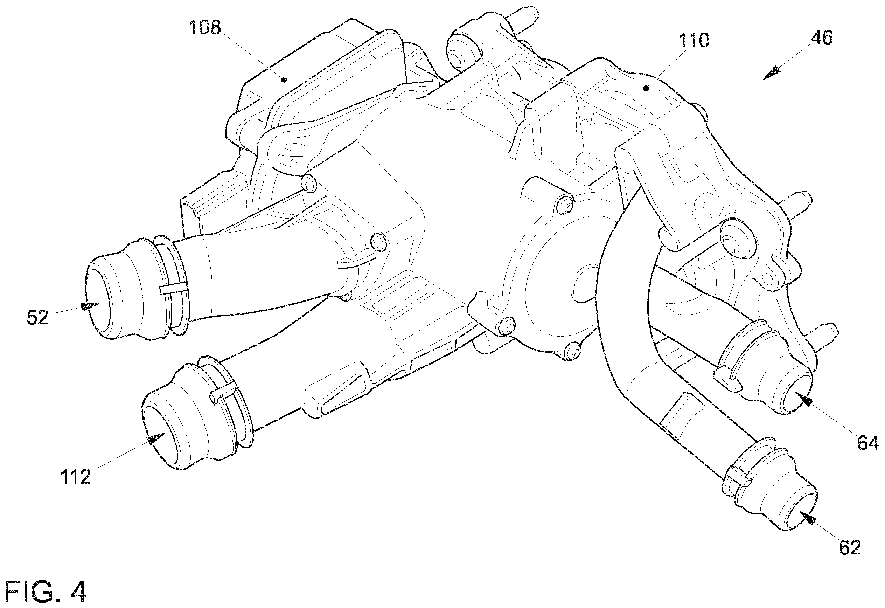

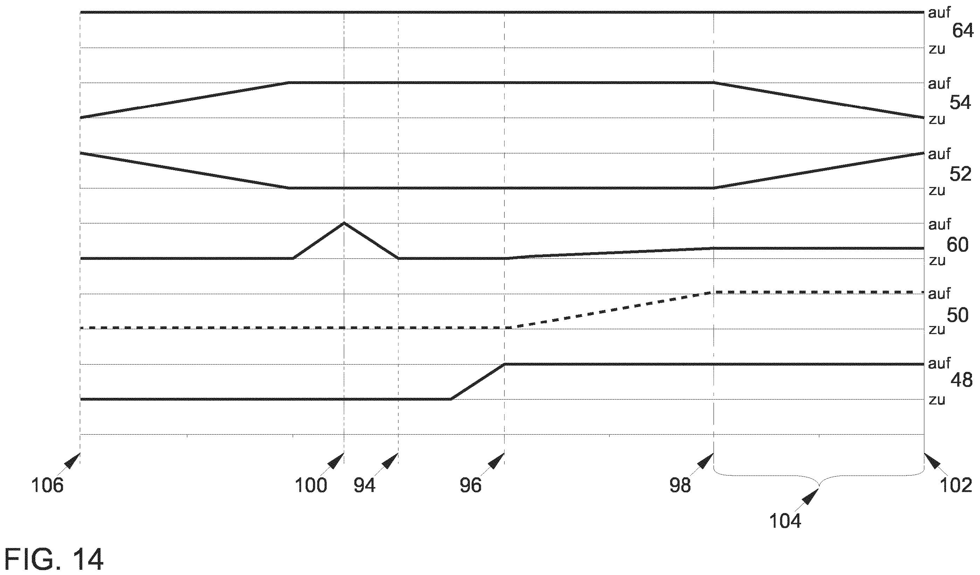

Die Fig. 14 zeigt in einem Diagramm in Abhängigkeit von der Drehstellung des Drehschiebers 58 (entlang der Horizontalachse) die Öffnungszustände für die drei Einlässe 48, 50, 64, den Thermostatbypass 60 sowie die zwei Auslässe 52, 54 der Verteilvorrichtung 46 sowie die Stellungen, in die die Verteilvorrichtung 46 eingestellt werden kann, um die beschriebene Beeinflussung von Kühlmittelströmungen durch die einzelnen Komponenten des Hauptkühlsystems zu realisieren. Die in der Fig. 14 ganz links dargestellte Nullstellung 106 stellt dabei einen ersten Endanschlag für die Beweglichkeit des Drehschiebers 58 und die ganz rechts dargestellte, vierte Stellung 102 den anderen Endanschlag dar. Zwischen diesen Stellungen 106, 102 kann der Drehschieber mittels eines dazugehörigen Aktors 108 (vgl. Fig. 1 bis 4) eingestellt werden.

Wie es bereits beschrieben wurde, ist der mit dem stromabwärts gelegenen Ende der ersten Nebenstrecke verbundene dritte Einlass 64 in sämtlichen Stellungen der Verteilvorrichtung 46 vollständig freigegeben. Zusätzlich dazu ist in der Nullstellung 106 der mit dem Hauptkühler 34 verbundene erste Auslass 52 vollständig freigegeben, während der mit dem Kühlerbypass 42 verbundene zweite Auslass 54, der mit dem Kühlkanal 24 des Zylinderkopfs 18 verbundene erste Einlass 48, der mit dem Kühlkanal 22 des Zylindergehäuses 14 über das erste Thermostatventil 44 verbundene zweite Einlass 50 sowie der Thermostatbypass 60 vollständig versperrt sind.

In der zwischen der Nullstellung 106 und der ersten Stellung 94 liegenden Zusatzstellung 100 ist neben dem permanent freigegebenen dritten Einlass 64 auch der Thermostatbypass 60 sowie der mit dem Kühlerbypass 42 verbundene zweite Auslass 54 vollständig freigegeben, während die übrigen Ein- und Auslässe 48, 50 und 52 vollständig versperrt sind.

Die erste Stellung 94 unterscheidet sich von der Zusatzstellung 100 lediglich dahingehend, dass der Thermostatbypass 60 (wieder) versperrt ist.

Die zweite Stellung 96 unterscheidet sich von der ersten Stellung 94 dahingehend, dass der mit dem Kühlkanal 24 des Zylinderkopfs 18 verbundene erste Einlass 48 freigegeben ist.

In der dritten Stellung 98 ist demgegenüber zusätzlich der über das Thermostatventil 44 mit dem Kühlkanal 22 des Zylindergehäuses 14 verbundene zweite Einlass 50 und teilweise auch der Thermostatbypass 60 freigegeben.

In der vierten Stellung 102 ist abweichend von der dritten Stellung 98 der mit dem Hauptkühler 34 verbundene erste Auslass 52 vollständig freigegeben und der mit dem Kühlerbypass 42 verbundene zweite Auslass 54 vollständig versperrt.

### BEZUGSZEICHENLISTE

- 10: Brennkraftmaschine
- 12: Verbrennungsmotor
- 14: Zylindergehäuse
- 16: Zylinder
- 18: Zylinderkopf
- 20: Abgasturbolader
- 22: Kühlkanal des Zylindergehäuses
- 24: Kühlkanal des Zylinderkopfs
- 26: Motorölkühler
- 28: Getriebeölkühler
- 30: Abgasrückführventil
- 32: AGR-Kühler
- 34: Kühlmittelkühler des Hauptkühlsystems/ Hauptkühler
- 36: erste Kühlmittelpumpe/Hauptkühlmittelpumpe des Hauptkühlsystems
- 38: erste Kühlmittelpumpe/Zusatzkühlmittelpumpe des Hauptkühlsystems
- 40: Heizungswärmetauscher
- 42: Kühlerbypass des Hauptkühlsystems
- 44: erstes Thermostatventil
- 46: Verteilvorrichtung
- 48: erster Einlass der Verteilvorrichtung
- 50: zweiter Einlass der Verteilvorrichtung
- 52: erster Auslass der Verteilvorrichtung
- 54: zweiter Auslass der Verteilvorrichtung
- 56: Verteilraum der Verteilvorrichtung
- 58: Verschlusskörper / Drehschieber
- 60: Thermostatbypass
- 62: Abzweig der ersten Nebenstrecke
- 64: dritter Einlass der Verteilvorrichtung
- 66: zweites Thermostatventil
- 68: Dosierventil
- 70: elektrischer Verdichterantrieb
- 72: Ladeluftkühler
- 74: Kühlmittelpumpe des Nebenkühlsystems
- 76: Kühlmittelkühler des Nebenkühlsystems / Zusatzkühler
- 78: Kühlerbypasses des Nebenkühlsystems
- 80: Steuerventil
- 82: erster Ausgleichsbehälter
- 84: erster Ausgleichsbehälter
- 86: Verbindungsleitung
- 88: Entlüftungsleitung
- 90: Rückschlagventil
- 92: Drossel
- 94: erste Stellung der Verteilvorrichtung
- 96: zweite Stellung der Verteilvorrichtung
- 98: dritte Stellung der Verteilvorrichtung
- 100: Zusatzstellung der Verteilvorrichtung
- 102: vierte Stellung der Verteilvorrichtung
- 104: Zwischenstellung
- 106: Nullstellung
- 108: Aktor
- 110: Gehäuse der Verteilvorrichtung
- 112: Zusatzeinlass der Verteilvorrichtung
- 114: Zusatzauslass der Verteilvorrichtung
- 116: Gebläse

## Patentansprüche

1. Brennkraftmaschine (10) mit einem Verbrennungsmotor (12) und mit einem Kühlsystem, das
- eine erste, mit dem Verbrennungsmotor (12) antriebsverbundene Kühlmittelpumpe (36),
- einen Kühlmittelkühler (34),
- einen den Kühlmittelkühler (34) umgehenden Kühlerbypass (42),
- eine zweite, elektromotorisch angetriebene Kühlmittelpumpe (38),
- einen Heizungswärmetauscher (40),
- eine oder mehrere Wärmequellen, die oder von denen eine der Verbrennungsmotor (12) ist, wobei der Verbrennungsmotor (12) einen Zylinderkopf (18) und ein Zylindergehäuse (14) umfasst, die Kühlmittelkanäle umfassen, die jeweils ein Teil des Kühlsystems sind, sowie
- ein Verteilsystem zur Verteilung eines Kühlmittels in dem Kühlsystem, mit einer Verteilvorrichtung (46) als Teil des Verteilsystems
aufweist, wobei eine Ausgestaltung des Kühlsystems derart vorgesehen ist, dass bei einem Nichtbetrieb des Verbrennungsmotors (12) Kühlmittel mittels der zweiten Kühlmittelpumpe (38) in einem die Wärmequelle(n) und den Kühlmittelkühler umfassenden (ersten) Kühlkreis förderbar ist, **dadurch gekennzeichnet, dass** die Verteilvorrichtung (46) derart ausgebildet ist, dass diese bei dem Nichtbetrieb in einer Nullstellung (106) eine aus dem Kühlmittelkanal (24) des Zylinderkopfs (18) kommende Kühlmittelströmung vollständig über den Heizungswärmetauscher (40) und anschließend den Kühlmittelkühler (34) führt.

2. Brennkraftmaschine (10) gemäß Anspruch 1, **dadurch gekennzeichnet, dass** die weitere oder eine der weiteren der Wärmequellen ein Abgasturbolader (20) ist.

3. Brennkraftmaschine (10) gemäß einem der vorhergehenden Ansprüche, **dadurch gekennzeichnet, dass**
die Verteilvorrichtung (46) derart ausgebildet ist, dass diese
- in einer ersten Stellung (94) eine von dem Zylinderkopf (18) kommende Kühlmittelströmung vollständig über den Heizungswärmetauscher (40) und anschließend den Kühlerbypass (42) führt;
- in einer zweiten Stellung (96) einen Teil der von dem Zylinderkopf (18) kommenden Kühlmittelströmung unter Umgehung des Heizungswärmetauschers (40) durch den Kühlerbypass (42) führt;
- in einer dritten Stellung (98) ergänzend zu der zweiten Stellung (96) eine Kühlmittelströmung durch das Zylindergehäuse (14) zulässt, und
- in einer vierten Stellung (102) abweichend von der dritten Stellung (98) das gesamte an der Verteilvorrichtung (46) ankommende Kühlmittel über den Kühlmittelkühler (34) führt.

4. Brennkraftmaschine (10) gemäß Anspruch 3, **dadurch gekennzeichnet, dass** dem Kühlkanal (22) des Zylindergehäuses (14) ein Thermostatventil (44) zugeordnet ist, das im weitestmöglich geschlossenen Zustand eine Pilotströmung durchlässt.

5. Brennkraftmaschine (10) gemäß Anspruch 4, **dadurch gekennzeichnet, dass** dem Thermostatventil (44) ein Thermostatbypass (60), der in einer Zusatzstellung (100) der Verteilvorrichtung (46) freigegeben ist, zugeordnet ist.

6. Brennkraftmaschine (10) gemäß Anspruch 3 oder einem der von Anspruch 3 abhängigen Ansprüche, **gekennzeichnet durch** eine Ausgestaltung der Verteilvorrichtung (46) derart, dass eine oder mehrere zwischen der dritten Stellung (98) und der vierten Stellung (102) liegende Zwischenstellungen (104) einstellbar sind.

7. Brennkraftmaschine (10) gemäß einem der vorhergehenden Ansprüche, **dadurch gekennzeichnet, dass** der (erste) Kühlkreis zusätzlich einen/den Heizungswärmetauscher (40) umfasst.

8. Brennkraftmaschine (10) gemäß Anspruch 3 oder einem der von Anspruch 3 abhängigen Ansprüche, **gekennzeichnet durch** einen
- die Verteilvorrichtung (46),
- den Kühlmittelkühler (34) sowie den Kühlerbypass in paralleler Verschaltung,
- die erste Kühlmittelpumpe (36) sowie
- die Kühlkanäle (22, 24) des Zylindergehäuses (14) und des Zylinderkopfs (18) in paralleler Verschaltung
integrierenden weiteren Kühlkreis des Kühlsystems.

9. Brennkraftmaschine (10) gemäß Anspruch 8, **dadurch gekennzeichnet, dass** der weitere Kühlkreis mit einer stromab der dazugehörigen Kühlmittelpumpe (36) und stromauf der Kühlkanäle (22, 24) des Zylindergehäuses (14) und des Zylinderkopfs (18) aus dem weiteren Kühlkreis abgehenden sowie stromauf dieser Kühlmittelpumpe (36) in den weiteren Kühlkreis mündenden Nebenstrecke kombiniert ist, in die ein Motorölkühler (26) und/oder ein Getriebeölkühler (28) integriert ist.

10. Brennkraftmaschine (10) gemäß einem der Ansprüche 8 oder 9, **gekennzeichnet durch** eine Ausgestaltung der ersten Kühlmittelpumpe (36) derart, dass diese hinsichtlich der Durchströmbarkeit veränderlich einstellbar ist.

11. Brennkraftmaschine (10) gemäß Anspruch 3 oder einem der von Anspruch 3 abhängigen Ansprüche, **dadurch gekennzeichnet, dass** die Verteilvorrichtung (46) ein Gehäuse (110) aufweist, das einen Verteilraum (56) begrenzt, wobei
- in den Verteilraum (56)
- ein mit dem Kühlkanal (24) des Zylinderkopfs (18) verbundener erster Einlass (48),
- ein mit dem Kühlkanal (22) des Zylindergehäuses (14) verbundener zweiter Einlass (50) und
- ein mit dem Heizungswärmetauscher (40) verbundener dritter Einlass (64) mündet, wobei aus dem ersten Einlass (48) vor der Mündung in den Verteilraum (56) ein mit dem Heizungswärmetauscher (40) verbundener Abzweig (62) abgeht, sowie
- aus dem Verteilraum (56)
- ein mit dem Kühlmittelkühler (34) verbundener erster Auslass (52) und
- ein mit dem Kühlerbypass (42) verbundener zweiter Auslass (54) abgeht und wobei mittels eines Verschlusskörpers (58), der mittels eines Aktors (108) innerhalb des Verteilraum (56) bewegbar ist,
- in der Nullstellung (106) der Verteilvorrichtung (46) die Verbindung zwischen dem Verteilraum (56) und dem ersten Einlass (48) sowie dem zweiten Auslass (54) durch den Verschlusskörper (58) versperrt und die Verbindung zwischen dem Verteilraum (56) und dem dritten Einlass (64) sowie dem ersten Auslass (52) freigegeben ist;
- in der ersten Stellung (94) der Verteilvorrichtung (46) die Verbindung zwischen dem Verteilraum (56) und dem ersten Einlass (48), dem zweiten Einlass (50) sowie dem ersten Auslass (52) durch den Verschlusskörper (58) versperrt und die Verbindung zwischen dem Verteilraum (56) und dem dritten Einlass (64) sowie dem zweiten Auslass (54) freigegeben ist;
- in der zweiten Stellung (96) der Verteilvorrichtung (46) die Verbindung zwischen dem Verteilraum (56) und dem zweiten Einlass (50) sowie dem ersten Auslass (52) durch den Verschlusskörper (58) versperrt und die Verbindung zwischen dem Verteilraum (56) und dem ersten Einlass (48), dem dritten Einlass (64) sowie dem zweiten Auslass (54) freigegeben ist;
- in der dritten Stellung (98) der Verteilvorrichtung (46) die Verbindung zwischen dem Verteilraum (56) und dem ersten Auslass (52) durch den Verschlusskörper (58) versperrt und die Verbindung zwischen dem Verteilraum (56) und dem ersten Einlass (48), dem zweiten Einlass (50), dem dritten Einlass (64) sowie dem zweiten Auslass (54) freigegeben ist, und
- in der vierten Stellung (102) der Verteilvorrichtung (46) die Verbindung zwischen dem Verteilraum (56) und dem zweiten Auslass (54) durch den Verschlusskörper (58) versperrt und die Verbindung zwischen dem Verteilraum (56) und dem ersten Einlass (48), dem zweiten Einlass (50), dem dritten Einlass (64) sowie dem ersten Auslass (52) freigegeben ist.

12. Brennkraftmaschine (10) gemäß Anspruch 5 oder einem der von Anspruch 5 abhängigen Ansprüche und gemäß Anspruch 11, **dadurch gekennzeichnet, dass** der Thermostatbypass (60) in den Verteilraum (56) mündet und der Verschlusskörper (58) in der Zusatzstellung (100) der Verteilvorrichtung (46) die Verbindung zwischen dem Verteilraum (56) und dem ersten Einlass (48), dem zweiten Einlass (50) sowie dem ersten Auslass (52) versperrt und die Verbindung zwischen dem Verteilraum (56) und dem Thermostatbypass (60), dem dritten Einlass (64) sowie dem zweiten Auslass (54) freigibt.

13. Brennkraftmaschine (10) gemäß Anspruch 11 oder 12, **dadurch gekennzeichnet, dass** der Verschlusskörper (58) als Drehschieber ausgebildet ist.

## Claims

1. Internal combustion engine (10) comprising a combustion engine (12) and comprising a cooling system which has
- a first coolant pump (36) drivingly connected to the combustion engine (12),
- a coolant radiator (34),
- a radiator bypass (42) bypassing the coolant radiator (34),
- a second, electric-motor-driven coolant pump (38),
- a heater core (40),
- one or more heat sources, which, or one of which, is the combustion engine (12), wherein the combustion engine (12) comprises a cylinder head (18) and a cylinder housing (14) which comprise coolant channels, each of which is part of the cooling system, and
- a distribution system for distributing a coolant in the cooling system, having a distribution device (46) as part of the distribution system,
wherein the cooling system is designed such that, during a non-operation of the combustion engine (12), coolant can be conveyed by means of the second coolant pump (38) in a (first) cooling circuit comprising the heat source(s) and the coolant radiator, **characterized in that** the distribution device (46) is designed such that, during the non-operation, in a zero position (106), it directs a coolant flow coming from the coolant channel (24) of the cylinder head (18) completely through the heater core (40) and then through the coolant radiator (34).

2. Internal combustion engine (10) according to claim 1, **characterized in that** the further or one of the further heat sources is an exhaust gas turbocharger (20).

3. Internal combustion engine (10) according to either of the preceding claims, **characterized in that** the distribution device (46) is designed such that
- in a first position (94), it directs a coolant flow coming from the cylinder head (18) completely through the heater core (40) and then through the radiator bypass (42);
- in a second position (96), it directs a portion of the coolant flow coming from the cylinder head (18) through the radiator bypass (42) while bypassing the heater core (40);
- in a third position (98), in addition to the second position (96), it allows a coolant flow through the cylinder housing (14), and
- in a fourth position (102), differing from the third position (98), it directs all of the coolant arriving at the distribution device (46) through the coolant radiator (34).

4. Internal combustion engine (10) according to claim 3, **characterized in that** the cooling channel (22) of the cylinder housing (14) is assigned a thermostat valve (44) which in the maximum closed state possible lets through a pilot flow.

5. Internal combustion engine (10) according to claim 4, **characterized in that** the thermostat valve (44) is assigned a thermostat bypass (60) which is released in an additional position (100) of the distribution device (46).

6. Internal combustion engine (10) according to claim 3 or any of the claims dependent on claim 3, **characterized by** a design of the distribution device (46) such that one or more intermediate positions (104) located between the third position (98) and the fourth position (102) can be set.

7. Internal combustion engine (10) according to any of the preceding claims, **characterized in that** the (first) cooling circuit additionally comprises a/the heater core (40).

8. Internal combustion engine (10) according to claim 3 or any of the claims dependent on claim 3, **characterized by** a further cooling circuit of the cooling system integrating
- the distribution device (46),
- the coolant radiator (34) and the radiator bypass in parallel connection,
- the first coolant pump (36) and
- the cooling channels (22, 24) of the cylinder housing (14) and of the cylinder head (18) in parallel connection.

9. Internal combustion engine (10) according to claim 8, **characterized in that** the further cooling circuit is combined with a secondary line which exits from the further cooling circuit downstream of the associated coolant pump (36) and upstream of the cooling channels (22, 24) of the cylinder housing (14) and of the cylinder head (18) and opens into the further cooling circuit upstream of this coolant pump (36), into which line an engine oil cooler (26) and/or a transmission oil cooler (28) is integrated.

10. Internal combustion engine (10) according to either claim 8 or claim 9, **characterized by** a design of the first coolant pump (36) such that said pump can be variably adjusted with regard to the flow rate.

11. Internal combustion engine (10) according to claim 3 or any of the claims dependent on claim 3, **characterized in that** the distribution device (46) has a housing (110) which delimits a distribution chamber (56), wherein
- into the distribution chamber (56) open
- a first inlet (48) connected to the cooling channel (24) of the cylinder head (18),
- a second inlet (50) connected to the cooling channel (22) of the cylinder housing (14), and
- a third inlet (64) connected to the heater core (40),
wherein a branch (62) connected to the heater core (40) exits from the first inlet (48) upstream of the opening into the distribution chamber (56), and
- from the distribution chamber (56) exit
- a first outlet (52) connected to the coolant radiator (34), and
- a second outlet (54) connected to the radiator bypass (42)
and wherein, by means of a closure body (58) which can be moved within the distribution chamber (56) by means of an actuator (108),
- in the zero position (106) of the distribution device (46), the connection between the distribution chamber (56) and the first inlet (48) and the second outlet (54) is blocked by the closure body (58) and the connection between the distribution chamber (56) and the third inlet (64) and the first outlet (52) is released;
- in the first position (94) of the distribution device (46), the connection between the distribution chamber (56) and the first inlet (48), the second inlet (50) and the first outlet (52) is blocked by the closure body (58) and the connection between the distribution chamber (56) and the third inlet (64) and the second outlet (54) is released;
- in the second position (96) of the distribution device (46), the connection between the distribution chamber (56) and the second inlet (50) and the first outlet (52) is blocked by the closure body (58) and the connection between the distribution chamber (56) and the first inlet (48), the third inlet (64) and the second outlet (54) is released;
- in the third position (98) of the distribution device (46), the connection between the distribution chamber (56) and the first outlet (52) is blocked by the closure body (58) and the connection between the distribution chamber (56) and the first inlet (48), the second inlet (50), the third inlet (64) and the second outlet (54) is released, and
- in the fourth position (102) of the distribution device (46), the connection between the distribution chamber (56) and the second outlet (54) is blocked by the closure body (58) and the connection between the distribution chamber (56) and the first inlet (48), the second inlet (50), the third inlet (64) and the first outlet (52) is released.

12. Internal combustion engine (10) according to claim 5 or any of the claims dependent on claim 5 and according to claim 11, **characterized in that** the thermostat bypass (60) opens into the distribution chamber (56) and in the additional position (100) of the distribution device (46), the closure body (58) blocks the connection between the distribution chamber (56) and the first inlet (48), the second inlet (50) and the first outlet (52), and releases the connection between the distribution chamber (56) and the thermostat bypass (60), the third inlet (64) and the second outlet (54).

13. Internal combustion engine (10) according to claim 11 or 12,
**characterized in that** the closure body (58) is designed as a rotary slide valve.

## Revendications

1. Moteur à combustion interne (10) comportant un moteur thermique (12) et comportant un système de refroidissement qui présente
- une première pompe à fluide de refroidissement (36) reliée par entraînement au moteur thermique (12),
- un radiateur de fluide de refroidissement (34),
- une dérivation de radiateur (42) contournant le radiateur de fluide de refroidissement (34),
- une seconde pompe à fluide de refroidissement (38) à entraînement électromoteur,
- un échangeur de chaleur de chauffage (40),
- une ou plusieurs sources de chaleur, dont l'une est le moteur thermique (12), dans lequel le moteur thermique (12) comprend une culasse de cylindre (18) et un bloc-cylindres (14) qui comprennent des canaux de fluide de refroidissement faisant respectivement partie du système de refroidissement, ainsi que
- un système de distribution permettant la distribution d'un fluide de refroidissement dans le système de refroidissement, comportant un dispositif de distribution (46) en tant que partie du système de distribution,
dans lequel une conception du système de refroidissement est prévue de telle sorte que, lors d'un non fonctionnement du moteur thermique (12), le fluide de refroidissement peut être acheminé, au moyen de la seconde pompe à fluide de refroidissement (38), dans un (premier) circuit de refroidissement comprenant la ou les sources de chaleur et le radiateur de fluide de refroidissement, **caractérisé en ce que** le dispositif de distribution (46) est configuré de telle sorte que, lors du non fonctionnement, dans une position zéro (106), il dirige entièrement un flux de fluide de refroidissement provenant du canal de fluide de refroidissement (24) de la culasse de cylindre (18) à travers l'échangeur de chaleur de chauffage (40) puis le radiateur de fluide de refroidissement (34).

2. Moteur à combustion interne (10) selon la revendication 1,
**caractérisé en ce que** l'autre ou l'une des autres sources de chaleur est un turbocompresseur à gaz d'échappement (20).

3. Moteur à combustion interne (10) selon l'une des revendications précédentes, **caractérisé en ce que** le dispositif de distribution (46) est configuré de telle sorte que
- dans une première position (94), il dirige entièrement un flux de fluide de refroidissement provenant de la culasse de cylindre (18) à travers l'échangeur de chaleur de chauffage (40) puis la dérivation de radiateur (42) ;
- dans une deuxième position (96), il dirige une partie du flux de fluide de refroidissement provenant de la culasse de cylindre (18) à travers la dérivation de radiateur (42) en contournant l'échangeur de chaleur de chauffage (40) ;
- dans une troisième position (98) complémentaire à la deuxième position (96), il autorise un flux de fluide de refroidissement à travers le bloc-cylindres (14), et
- dans une quatrième position (102) différente de la troisième position (98), il dirige la totalité du fluide de refroidissement arrivant dans le dispositif de distribution (46) à travers le radiateur de fluide de refroidissement (34).

4. Moteur à combustion interne (10) selon la revendication 3,
**caractérisé en ce qu'**une soupape thermostatique (44) est associée au canal de refroidissement (22) du bloc-cylindres (14), laquelle laisse passer, à l'état le plus fermé possible, un flux pilote.

5. Moteur à combustion interne (10) selon la revendication 4,
**caractérisé en ce que** la soupape thermostatique (44) est associée à une dérivation thermostatique (60) qui est libérée dans une position supplémentaire (100) du dispositif de distribution (46).

6. Moteur à combustion interne (10) selon la revendication 3 ou l'une des revendications dépendantes de la revendication 3, **caractérisé par** une conception du dispositif de distribution (46) de telle sorte qu'une ou plusieurs positions intermédiaires (104) situées entre la troisième position (98) et la quatrième position (102) peuvent être réglées.

7. Moteur à combustion interne (10) selon l'une des revendications précédentes, **caractérisé en ce que** le (premier) circuit de refroidissement comprend en outre un ou l'échangeur de chaleur de chauffage (40).

8. Moteur à combustion interne (10) selon la revendication 3 ou l'une des revendications dépendantes de la revendication 3, **caractérisé par** un autre circuit de refroidissement du système de refroidissement qui intègre
- le dispositif de distribution (46),
- le radiateur de fluide de refroidissement (34) ainsi que la dérivation de radiateur en raccordement parallèle,
- la première pompe à fluide de refroidissement (36), ainsi que
- les canaux de refroidissement (22, 24) du bloc-cylindres (14) et de la culasse de cylindre (18) en raccordement parallèle.

9. Moteur à combustion interne (10) selon la revendication 8,
**caractérisé en ce que** l'autre circuit de refroidissement est combiné à une ligne secondaire partant de l'autre circuit de refroidissement en aval de la pompe à fluide de refroidissement (36) correspondante et en amont des canaux de refroidissement (22, 24) du bloc-cylindres (14) et de la culasse de cylindre (18) ainsi que débouchant dans l'autre circuit de refroidissement en amont de ladite pompe à fluide de refroidissement (36), ligne secondaire dans laquelle un radiateur d'huile moteur (26) et/ou un radiateur d'huile de transmission (28) sont intégrés.

10. Moteur à combustion interne (10) selon l'une des revendications 8 à 9,
**caractérisé par** une conception de la première pompe à fluide de refroidissement (36) de telle sorte que celle-ci peut être réglée de manière variable concernant l'écoulement qui la traverse.

11. Moteur à combustion interne (10) selon la revendication 3 ou l'une des revendications dépendantes de la revendication 3, **caractérisé en ce que** le dispositif de distribution (46) présente un boîtier (110) qui délimite un espace de distribution (56), dans lequel
- débouchent, dans l'espace de distribution (56),
- une première entrée (48) raccordée au canal de refroidissement (24) de la culasse de cylindre (18),
- une deuxième entrée (50) raccordée au canal de refroidissement (22) du bloc-cylindres (14), et
- une troisième entrée (64) raccordée à l'échangeur de chaleur de chauffage (40),
dans lequel un embranchement (62) raccordé à l'échangeur de chaleur de chauffage (40) part de la première entrée (48) avant la bouche dans l'espace de distribution (56), et
- partent de l'espace de distribution (56)
- une première sortie (52) raccordée au radiateur de fluide de refroidissement (34), et
- une seconde sortie (54) raccordée à la dérivation de radiateur (42),
et dans lequel, au moyen d'un corps d'obturation (58) qui peut être déplacé à l'intérieur de l'espace de distribution (56) au moyen d'un actionneur (108),
- dans la position zéro (106) du dispositif de distribution (46), le raccordement entre l'espace de distribution (56) et la première entrée (48) ainsi que la seconde sortie (54) est bloqué par le corps d'obturation (58) et le raccordement entre l'espace de distribution (56) et la troisième entrée (64) ainsi que la première sortie (52) est libéré ;
- dans la première position (94) du dispositif de distribution (46), le raccordement entre l'espace de distribution (56) et la première entrée (48), la deuxième entrée (50) ainsi que la première sortie (52) est bloqué par le corps d'obturation (58) et le raccordement entre l'espace de distribution (56) et la troisième entrée (64) ainsi que la seconde sortie (54) est libéré ;
- dans la deuxième position (96) du dispositif de distribution (46), le raccordement entre l'espace de distribution (56) et la deuxième entrée (50) ainsi que la première sortie (52) est bloqué par le corps d'obturation (58) et le raccordement entre l'espace de distribution (56) et la première entrée (48), la troisième entrée (64) ainsi que la seconde sortie (54) est libéré ;
- dans la troisième position (98) du dispositif de distribution (46), le raccordement entre l'espace de distribution (56) et la première sortie (52) est bloqué par le corps d'obturation (58) et le raccordement entre l'espace de distribution (56) et la première entrée (48), la deuxième entrée (50), la troisième entrée (64) ainsi que la seconde sortie (54) est libéré, et
- dans la quatrième position (102) du dispositif de distribution (46), le raccordement entre l'espace de distribution (56) et la seconde sortie (54) est bloqué par le corps d'obturation (58) et le raccordement entre l'espace de distribution (56) et la première entrée (48), la deuxième entrée (50), la troisième entrée (64) ainsi que la première sortie (52) est libéré.

12. Moteur à combustion interne (10) selon la revendication 5 ou l'une des revendications dépendantes de la revendication 5 et selon la revendication 11, **caractérisé en ce que** la dérivation thermostatique (60) débouche dans l'espace de distribution (56) et le corps d'obturation (58), dans la position supplémentaire (100) du dispositif de distribution (46), bloque le raccordement entre l'espace de distribution (56) et la première entrée (48), la deuxième entrée (50) ainsi que la première sortie (52) et libère le raccordement entre l'espace de distribution (56) et la dérivation thermostatique (60), la troisième entrée (64) ainsi que la seconde sortie (54).

13. Moteur à combustion interne (10) selon la revendication 11 ou 12,
**caractérisé en ce que** le corps d'obturation (58) est conçu sous forme de vanne rotative.
